# EUROPEAN PATENT APPLICATION

(11) **EP 1 564 990 A2**
(43) Date of publication of application: **17.08.2005**
(21) Application number: 05003187.1
(22) Date of filing: 15.02.2005
(51) Int. Cl.: H04N 5/765

(54) **Equipment management system and method**

(30) Priority: 16.02.2004 JP 2004038118
(71) Applicant: MATSUSHITA ELECTRIC INDUSTRIAL CO., LTD., Kadoma-shi, Osaka 571-8501 (JP)
(72) Inventor: Yamaoka, Masaru, Osaka (JP); Tanaka, Shin-ichi, Kyotanabe-shi Kyoto (JP); Usui, Makoto, Osaka-shi, Osaka (JP); Mushika, Yoshihiro, Neyagawa-shi, Osaka (JP); Shihara, Tetsuya, Kadoma-shi Osaka (JP); Nakamura, Tadashi, Nara-shi, Nara (JP)
(74) Representative: TBK-Patent

(57) **Abstract**

An equipment management system is provided in which: two exchangeable record-medium recording units and an exchangeable record-medium regeneration unit are connected via an in-house network, so that they can communicate with each other; and one of these pieces of equipment is master equipment which manages resource information on the pieces of equipment, and the other pieces of equipment are slave equipment which is controlled by the master equipment.

## Description

### Background of the Invention

### Field of the Invention;

The present invention relates to an equipment management system and an equipment management method which manage resource information on equipment that relates to at least either of the regeneration and recording of contents which include at least either of video data and audio data. It also relates to an equipment management unit which is used in the equipment management system.

### Description of the related art:

Conventionally, a program picture-recording system is proposed which is designed so that the picture recording of a broadcast program can be easily reserved. Such a picture-recording reservation is made, using electronic program information, such as the broadcasting channel of a program and the time of a program (i.e., its date on the air, the time when its broadcast starts and the time when it ends). For example, Japanese Patent Laid-Open No. 10-155131 specification) discloses the art of not only offering program information to a program picture-recording unit in a house, using a server which is connected via a network to the program picture-recording unit, but also changing the contents reserved by each program picture-recording unit if the time of a program is changed.

However, in recent years, several program picture-recording units are used even in a house, thus remarkably increasing the number of program picture-recording units which are controlled by a server. If it controls all of them, the server has to bear an excessive load. Thus, it is difficult for the server to control all the program picture-recording units. This makes it impossible to cooperatively and efficiently operate the several program picture-recording units in a house.

In addition, in a house, there are program picture-recording units in which various record mediums are used, as well as a large number of pieces of equipment, such as a regeneration unit which regenerates contents that are made up of video data, audio data and the like and a display unit which displays the contents. Each piece of equipment individually manages resource information on equipment that relates to the regeneration and recording of contents. The resource information is, for example, equipment resource information for specifying a function available to a user, contents identification information for specifying the recorded contents, or the like. As a result, a lot of equipment cannot be intensively managed, thus preventing the several pieces of equipment from operating cooperatively and efficiently.

### Brief Summary of Invention

It is an object of the present invention to provide an equipment management system, an equipment management method and an equipment management unit in which resource information on equipment that relates to at least either of the regeneration and recording of contents can be intensively managed, and thereby, a plurality of pieces of equipment can operate cooperatively and efficiently.

The equipment management system according to an aspect of the present invention which manages resource information on equipment that relates to at least either of the regeneration and recording of contents which include at least either of video data and audio data, comprising, a plurality of pieces of equipment which are connected via a predetermined network so as to communicate with each other, one of the plurality of pieces of equipment being master equipment which manages resource information on the plurality of pieces of equipment, and the rest of the plurality of pieces of equipment being slave equipment which is controlled by the master equipment, the slave equipment including: a resource recording means for recording resource information on the slave equipment itself; and a communicating means for transmitting, to the master equipment, the resource information on the slave equipment itself which is recorded in the resource recording means, the master equipment including: a communicating means for receiving the resource information which is transmitted by the communicating means of the slave equipment; a resource recording means for recording, in each piece of equipment, resource information on the master equipment itself and the resource information on the slave equipment which is received by the communicating means; and a managing means for managing the resource information on each piece of equipment which is recorded in the resource recording means.

In this equipment management system, the resource information on the slave equipment itself which is recorded in the slave equipment is transmitted to the master equipment. Then, the transmitted resource information is received in the master equipment. Next, the received resource information on the slave equipment is recorded in each piece of equipment. Sequentially, the recorded resource information on each piece of equipment is intensively managed. Therefore, using the resource information on each piece of equipment, the master equipment can control the operation of the slave equipment. Thus, resource information on equipment that relates to at least either of the regeneration and recording of contents can be intensively managed, and thereby, a plurality of pieces of equipment can operate cooperatively and efficiently.

These and other objects, features and advantages of the present invention will become more apparent upon reading of the following detailed description along with the accompanied drawings.

### Brief Description of the drawings

Fig. 1 is a block diagram, showing the configuration of an equipment management system according to an embodiment of the present invention.
Fig. 2 is a block diagram, showing the configuration of an exchangeable record-medium recording unit shown in Fig. 1.
Fig. 3 is a block diagram, showing the configuration of a network adapter shown in Fig. 2.
Fig. 4 is a block diagram, showing the configuration of a resource-information recording section shown in Fig. 2.
Fig. 5 is a block diagram, showing the configuration of an exchangeable record-medium regeneration unit shown in Fig. 1.
Fig. 6 is a flow chart, showing a resource-information addition processing in the equipment management system shown in Fig. 1.
Fig. 7 is a flow chart, showing a resource updating processing in the equipment management system shown in Fig. 1.
Fig. 8 is a flow chart, showing a diagnosis processing in the equipment management system shown in Fig. 1.
Fig. 9 is a flow chart, showing a resource deletion processing in the equipment management system shown in Fig. 1.
Fig. 10 is a flow chart, showing an exchangeable record-medium usage-condition sharing processing in the equipment management system shown in Fig. 1.
Fig. 11 is a flow chart, showing a contents forwarding regeneration processing for, in response to a request from a piece of slave equipment, forwarding and regenerating contents from another piece of slave equipment in the equipment management system shown in Fig. 1.
Fig. 12 is a flow chart, showing a contents movement processing for, in response to a request from a piece of slave equipment which is the exchangeable record-medium recording unit, moving contents from another piece of slave equipment in the equipment management system shown in Fig. 1.
Fig. 13 is a flow chart, showing a contents movement processing for moving contents from a piece of slave equipment which is the exchangeable record-medium recording unit to another piece of slave equipment in the equipment management system shown in Fig. 1.
Fig. 14 is a flow chart, showing a reserved picture-recording processing for, in response to a reserved picture-recording setting by a piece of slave equipment, making a picture recording using another piece of slave equipment in the equipment management system shown in Fig. 1.
Fig. 15 is a flow chart, showing an extended reserved picture-recording processing in the case where the broadcasting time of a program is changed in the equipment management system shown in Fig. 1.
Fig. 16 is a first flow chart, showing a provisional picture-recording processing in the case where slave equipment for picture recording cannot make a picture recording in the equipment management system shown in Fig. 1.
Fig. 17 is a second flow chart, showing a provisional picture-recording processing in the case where slave equipment for picture recording cannot make a picture recording in the equipment management system shown in Fig. 1.
Fig. 18 is a flow chart, showing a backup picture-recording processing for recording the picture of a set of contents as main contents and dependent contents in the equipment management system shown in Fig. 1.
Fig. 19 is a schematic representation, showing the relation between main contents and dependent contents.
Fig. 20 is a flow chart, showing a contents restoration processing for, if dependent contents cannot be regenerated, restoring the dependent contents using main contents in the equipment management system shown in Fig. 1.
Fig. 21 is a flow chart, showing a contents-operation restriction processing for, if dependent contents accept an operation instruction by a user, refusing the operation instruction to main contents by the user in the equipment management system shown in Fig. 1.
Fig. 22 is a flow chart, showing a contents united-movement processing for moving dependent contents together with main contents when the main contents are moved to an exchangeable record medium in the equipment management system shown in Fig. 1.
Fig. 23 is a flow chart, showing a contents deletion processing for deleting dependent contents if main contents are moved to an exchangeable record medium in the equipment management system shown in Fig. 1.
Fig. 24 is a flow chart, showing a contents-operation restriction processing for refusing an operation to dependent contents by a user when main contents are moved to an exchangeable record medium in the equipment management system shown in Fig. 1.
Fig. 25 is a flow chart, showing a contents-transmission restriction processing for transmitting a regeneration stream which is transmitted for recording or regeneration prior to another stream in the equipment management system shown in Fig. 1.
Fig. 26 is a flow chart, showing a master-equipment authentication processing for distributing contents to the slave equipment after the master equipment executes an authentication processing when a BS digital broadcast is received in the equipment management system shown in Fig. 1.
Fig. 27 is a flow chart, showing an operation-setting sharing processing for sharing the setting of an operation among pieces of equipment in the equipment management system shown in Fig. 1.

### Detailed Description of Invention

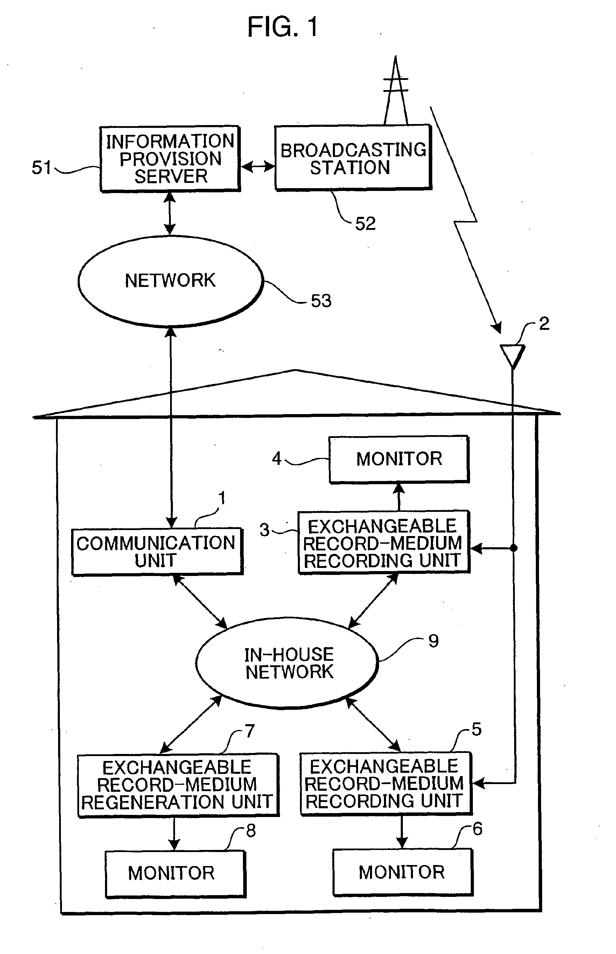

Hereinafter, an equipment management system according to the present invention will be described with reference to the drawings. Fig. 1 is a block diagram, showing the configuration of an equipment management system according to an embodiment of the present invention.

The equipment management system shown in Fig. 1 includes: a communication unit 1; an antenna 2; an exchangeable record-medium recording units 3, 5 which are master equipment or slave equipment; an exchangeable record-medium regeneration unit 7; and monitors 4, 6, 8 which are connected to them. It manages resource information on equipment that relates to the regeneration and recording of contents data which include at least either of video data and audio data. In this specification, the contents data is suitably expressed simply as the "contents".

The communication unit 1, the exchangeable record-medium recording units 3, 5 and the exchangeable record-medium regeneration unit 7 are connected via an in-house network 9, so that they can communicate with each other. The communication unit 1 is connected via a network 53 to an information provision server 51, so that they can communicate with each other. The information provision server 51 and a broadcasting station 52 are connected via a dedicated line, a general-purpose network, or the like, so that they can communicate with each other.

As the in-house network 9, a wired or radio LAN (or local area network), or the like, is used which is fitted to IEEE1394, Ethernet (which is a trademark), home-bus standard HBS, ECHONET (or energy conservation and homecare network) standard, or the like. As the network 53, there is used, for example, the Internet, a public telephone line, or the like.

One of the exchangeable record-medium recording units 3, 5 and the exchangeable record-medium regeneration unit 7 is the master equipment which manages the resource information on these pieces of equipment. The rest is the slave equipment which is controlled by the master equipment. Herein, the pieces of equipment which are the master equipment and the slave equipment and the number of those pieces of equipment are not limited especially to the above described example. They can be variously changed, using a display unit such as a television, using four or more pieces of equipment, or the like. Besides, if the master equipment can work as the slave equipment, the master equipment may also be operated as the slave equipment.

Herein, if there are two or more pieces of equipment, the master equipment can also be selected in various methods. A user can choose which equipment should be the master equipment, the equipment which has the highest-level function may also be automatically selected, or the like. In addition, if a network adapter 25 (described later) is mounted on the main body of equipment, a control section 20 may also execute the following processing. Using the network adapter 25, it searches for the master equipment among the other pieces of equipment which are connected to the in-house network 9. Then, it transmits resource information which is stored in a self-resource information recording section 42 to the master equipment which has been obtained by the search.

The communication unit 1 is configured by a modem and the like. Via the network 53, it acquires electronic program information which includes a receiving channel, program contents and program time for each program which is provided by the information provision server 5. Then, it transmits the electronic program information via the in-house network 9 to the exchangeable record-medium recording units 3, 5. The antenna 2 receives an electronic radio wave which is transmitted from the broadcasting station 52, and then, outputs contents such as a program to the exchangeable record-medium recording units 3, 5. The exchangeable record-medium recording units 3, 5 acquire the electronic program information, and based on the electronic program information, they record the picture of the program which is reserved by a user in an exchangeable record medium or a fixed record medium. The monitors 4, 6, 8 display and offer to the user, contents which are regenerated by the exchangeable record-medium recording units 3, 5 and the exchangeable record-medium regeneration unit 7.

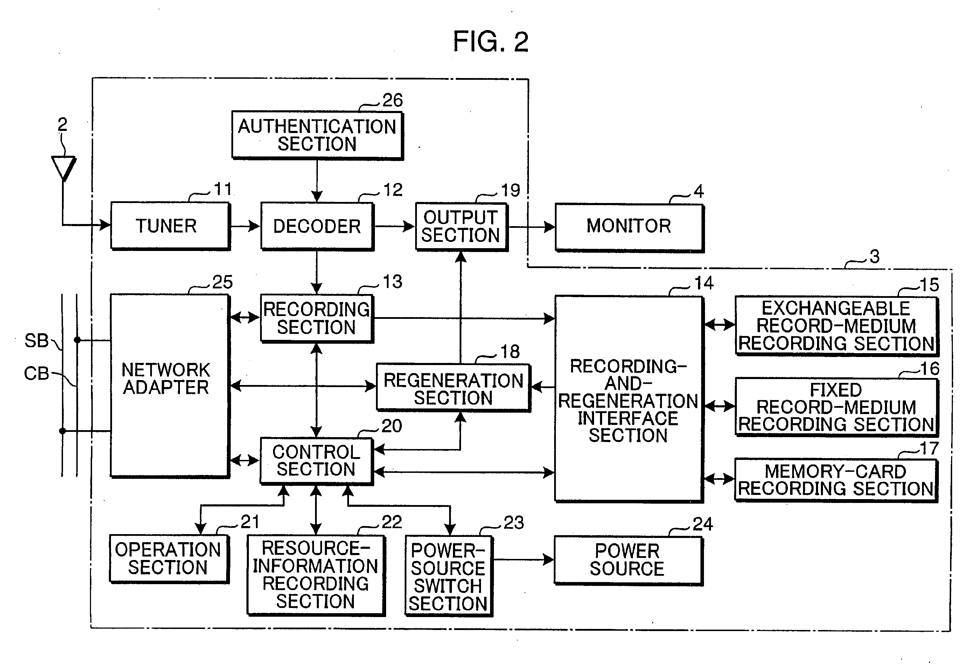

Fig. 2 is a block diagram, showing the configuration of the exchangeable record-medium recording unit 3 shown in Fig. 1. Herein, the exchangeable record-medium recording unit 5 shown in Fig. 1 is also configured in the same way as the exchangeable record-medium recording unit 3. Thus, its detailed description is omitted.

The exchangeable record-medium recording unit 3 shown in Fig. 2 includes: a tuner 11; a decoder 12; a recording section 13; a recording-and-regeneration interface section 14; an exchangeable record-medium recording section 15; a fixed record-medium recording section 16; a memory-card recording section 17; a regeneration section 18; an output section 19; a control section 20; an operation section 21; a resource-information recording section 22; a power-source switch section 23; a power source 24; a network adapter 25; and an authentication section 26.

The tuner 11 is connected to the antenna 2. Using the operation section 21, it extracts the channel program data selected by a user from a broadcast radio wave which is received by the antenna 2. Then, it outputs it to the decoder 12. In this specification, the program data is suitably expressed simply as the "program". The decoder 12 is used in the case where a program by digital TV broadcasting is received. It decodes a program which is received in a compressed-and-coded format, and outputs it to the recording section 13 and the output section 19. The output section 19 outputs the program to the monitor 4 and displays it in the monitor 4.

The authentication section 26 executes a contents watching-and-listening authentication processing for obtaining permission to watch and listen to contents. For example, if a B-CAS card is inserted, it executes a watching-and-listening authentication processing for BS digital TV broadcasting. Thereafter, the decoder 12 decodes the programwhich is received in a compressed-and-coded format, and outputs it to the recording section 13 and the output section 19.

Ordinarily, a general-purpose Ethernet (trademark) or the like is used for an in-house network. In this embodiment, the in-house network 9 is configured simply by two kinds of buses, a control bus CB and a stream bus SB. The control bus CB which configures the in-house network 9 is used to transmit various control signals between the master equipment and the slave equipment. The stream bus SB is used to transmit various contents between the master equipment and the slave equipment. The network adapter 25 is configured so as to be attached to and detached from the main body of equipment. It is connected to the control bus CB and the stream bus SB of the in-house network 9. The network adapter 25 transmits and receives a control signal to and from the control section 20 of another piece of equipment, via the control section 20 and the control bus CB. Besides, it receives contents which are transmitted via the stream bus SB from another piece of equipment, and transmits them to the recording section 13. Then, it transmits contents which are outputted from the regeneration section 18 to another piece of equipment, via the stream bus SB.

Via the recording-and-regeneration interface section 14, the recording section 13 outputs contents to the exchangeable record-medium recording section 15, the fixed record-medium recording section 16 and the memory-card recording section 17. Thereby, it controls a recording operation. For example, a DVD drive is used as the exchangeable record-medium recording section 15, a hard-disk drive is used as the fixed record-medium recording section 16, and a memory-card reader/writer is used as the memory-card recording section 17. In addition, as an exchangeable record medium for recording, there is used, for example, an optical disk such as a DVD-RAM, a DVD-R, a CD-RW, a CD-R, a PD (or phase change rewritable disk) and a blu-ray disk, a videotape such as a VHS, or the like. A hard disk or the like is used as a fixed record medium. As a memory card, there is used an SD (or secure digital) memory card which is formed by a semiconductor memory and the like, or the like. Besides, as an exchangeable record medium for regeneration, in addition to the above described optical disk, there is used, for example, a DVD-ROM, a CD-ROM, or the like. Herein, the recording section which is provided in the exchangeable record-medium recording unit 3 is not limited especially to the above described example, and thus, it can be variously changed.

Furthermore, via the network adapter 25, the recording section 13 refers to electronic program information which is acquired by the communication unit 1. Then, it generates contents identification information on the contents which are recorded in the exchangeable record-medium recording section 15, the fixed record-medium recording section 16 and the memory-card recording section 17. Thereby, it outputs the contents identification information to the control section 20.

The operation section 21 accepts an operation instruction by a user and outputs it to the control section 20. For example, the operation section 21 accepts reservation setting information for setting a reserved picture-recording of a program which is recorded as the contents. Then, it outputs the reservation setting information to the control section 20. After the network adapter 25 has received the reservation setting information from the master equipment, the operation section 21 detects that the picture of the program specified by the reservation setting information cannot be recorded. Then, it notifies the control section 20 of the master equipment.

In addition, the recording section 13 detects a change in the broadcasting time of the program which has been accepted by the operation section 21, and then, notifies the control section 20. Besides, the recording section 13 detects a commercial message during the program whose picture is recorded. Then, the control section 20 stops or starts recording the program during the commercial message.

The regeneration section 18 receives, via the recording-and-regeneration interface section 14, the contents which have been regenerated by the exchangeable record-medium recording section 15, the fixed record-medium recording section 16 and the memory-card recording section 17. Then, it outputs them to the output section 19 and the network adapter 25, and controls a regeneration operation. The recording-and-regeneration interface section 14 executed an interface between the recording section 13 and the regeneration section 18, and the exchangeable record-medium recording section 15, the fixed record-medium recording section 16 and the memory-card recording section 17.

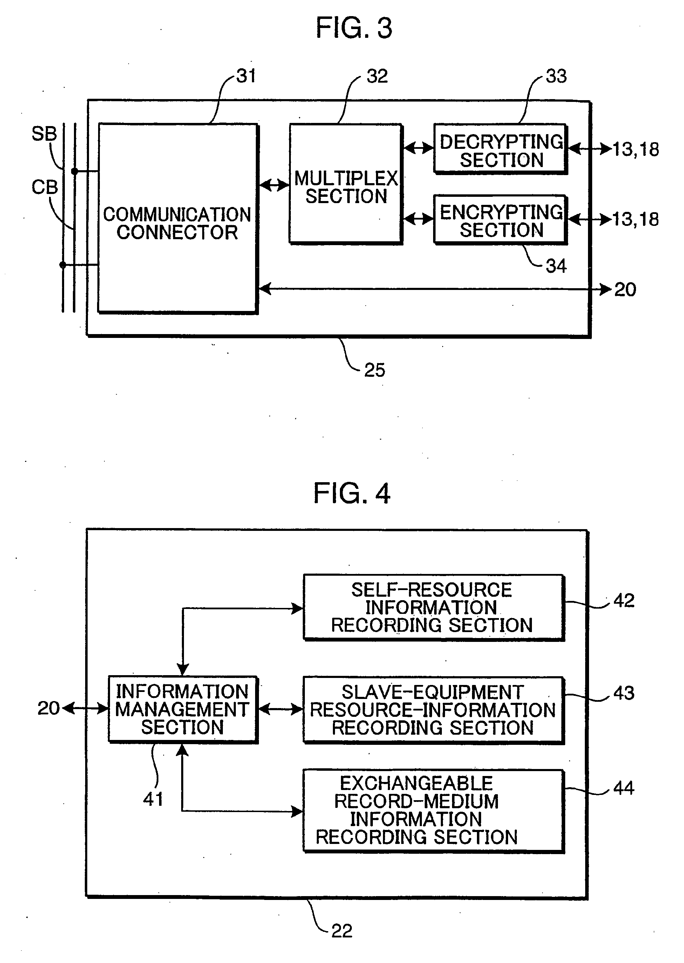

Fig. 3 is a block diagram, showing the configuration of the network adapter 25 shown in Fig. 2. The network adapter 25 can be attached and detached, and providing the network adapter 25 offers a network communication function to the master equipment and the slave equipment. As shown in Fig. 3, the network adapter 25 includes: a communication connector 31; a multiplex section 32; a decrypting section 33; and an encrypting section 34. The communication connector 31 is connected to the control bus CB and the stream bus SB. It outputs, to the control section 20, a control signal which is inputted from the control bus CB, and outputs, to the control bus CB, a control signal which is outputted from the control section 20. In addition, the communication connector 31 outputs, to the multiplex section 32, contents which are inputted from the stream bus SB, and outputs, to the stream bus SB, contents which are outputted from the multiplex section 32. The decrypting section 33 decrypts the encrypted contents which are outputted from the multiplex section 32. Then, it outputs them to the recording section 13 and the regeneration section 18. The encrypting section 34 encrypts contents which are outputted from the recording section 13 and the regeneration section 18. Then, it outputs them to the multiplex section 32.

Again, with reference to Fig. 2, the control section 20 is configured by a microprocessor which includes a ROM (or read only memory), a RAM (or random access memory) or the like, and the like. It executes an equipment management program which is recorded in the ROM, so that it can manage, for each piece of equipment, the resource information which is recorded in the resource-information recording section 22. In addition, it controls the operation of the recording section 13, the recording-and-regeneration interface section 14, the regeneration section 18, the operation section 21 and the power-source switch section 23. Using the network adapter 25, the control section 20 transmits and receives a control signal to and from another piece of equipment. The power-source switch section 23 switches the state of the power source 24. Specifically, it switches from an ordinary power-source state in which equipment ordinarily operates to a sleep state where power consumption is less than that in the ordinary power-source state, and vice versa.

Fig. 4 is a block diagram, showing the configuration of the resource-information recording section 22 shown in Fig. 2. As shown in Fig. 4, the resource-information recording section 22 includes: an information management section 41; a self-resource information recording section 42; a slave-equipment resource-information recording section 43; and an exchangeable record-medium information recording section 44. In response to a request by the control section 20, the information management section 41 reads resource information from the self-resource information recording section 42, the slave-equipment resource-information recording section 43 and the exchangeable record-medium information recording section 44. In addition, it records resource information which is outputted from the control section 20 in the self-resource information recording section 42, the slave-equipment resource-information recording section 43 and the exchangeable record-medium information recording section 44.

The self-resource information recording section 42 records resource information on the exchangeable record-medium recording unit 3. The slave-equipment resource-information recording section 43 records resource information on the slave equipment when the exchangeable record-medium recording unit 3 operates as the master equipment. When the exchangeable record-medium recording unit 3 operates as the slave equipment, the exchangeable record-medium information recording section 44 records exchangeable record-medium identification information for identifying the exchangeable record medium used by the exchangeable record-medium recording unit 3, and usage condition information which includes at least either of the regeneration condition and the recording condition of the exchangeable record medium. On the other hand, when the exchangeable record-medium recording unit 3 operates as the master equipment, it records exchangeable record-medium identification information for identifying the exchangeable record medium used by the exchangeable record-medium recording unit 3 and the slave equipment, and usage condition information on the exchangeable record medium.

Herein, the resource information on equipment includes: equipment identification information for identifying each piece of equipment; equipment resource information for specifying a function available to a user in each piece of equipment; operation setting information for specifying an operation setting which is set by a user for the operation section 21; contents identification information for specifying the contents which are recorded in an exchangeable record medium which is mounted in the exchangeable record-medium recording section 15, a fixed record medium in the fixed record-medium recording section 16 and a memory card in the memory-card recording section 17; exchangeable record-medium identification information for identifying the used exchangeable record medium; usage condition information which includes at least either of the regeneration condition and the recording condition of the used exchangeable record medium; and the like.

Specifically, the equipment identification information is equivalent to a MAC (or media access control) address for identifying an identification code peculiar to each piece of equipment and each piece of equipment in the in-house network 9, or the like. The equipment resource information is equivalent to an identification code for specifying each function, such as the function of recording contents in an exchangeable record medium, the function of regenerating contents from an exchangeable record medium, the function of recording contents in a fixed record medium, the function of regenerating contents from a fixed record medium, the function of recording contents in a memory card, the function of regenerating contents from a memory card, the function of making a reserved picture-recording, the function of displaying contents on an video, the function of outputting contents on a audio and the function of authenticating watching-and-listening. Or, it is equivalent to an identification code for specifying the empty capacity of a fixed record medium and an exchangeable record medium, whether or not an exchangeable record medium is mounted, mounted exchangeable record-medium information for identifying a mounted exchangeable record medium and the like, or the like. The operation setting information is equivalent to channel setting information for specifying the setting of a receiving channel which is set by a user, or the like. The contents identification information is equivalent to: program contents information such as the time when a broadcast starts and the time when it ends, the title of a program and the name of a person who appears which are obtained from electronic program information or the like; copyright management information on the copyright of contents; main-contents identification information which includes information for identifying main contents and identifying a record medium in which data is actually recorded; dependent-contents identification information which includes information for identifying dependent contents and identifying a record medium in which data is actually recorded; or the like.

Furthermore, the copyright management information is equivalent to: movement restriction information which includes at least one of the pieces of information on the number of times up to which contents are permitted to move, the period during which the contents are permitted to move and the time when the contents are permitted to move, for an exchangeable record medium; copy restriction information which includes at least one of the pieces of information on the number of times up to which contents are permitted to be copied, the number of generations for which the contents are permitted to be copied, the period during which the contents are permitted to be copied and the time when the contents are permitted to be copied; regeneration restriction information which includes at least one of the pieces of information on the number of times up to which contents are permitted to be regenerated, the period during which the contents are permitted to be regenerated and the time when the contents are permitted to be regenerated; or the like. Besides, the copy restriction information is equivalent to: copy impermissible information which does not permit contents to be copied; copy free information which permits the contents to be freely copied; one-generation copy permissible information which permits the contents to be copied only for one generation; once-copy permissible information which permits the contents to be copied only once; or the like.

Moreover, the usage condition information is equivalent to: regeneration condition information and recording condition information which are obtained by the learning of optimizing laser power of an optical pickup, the learning of optimizing its recording pulse, the learning of optimizing its tilt, or the like.

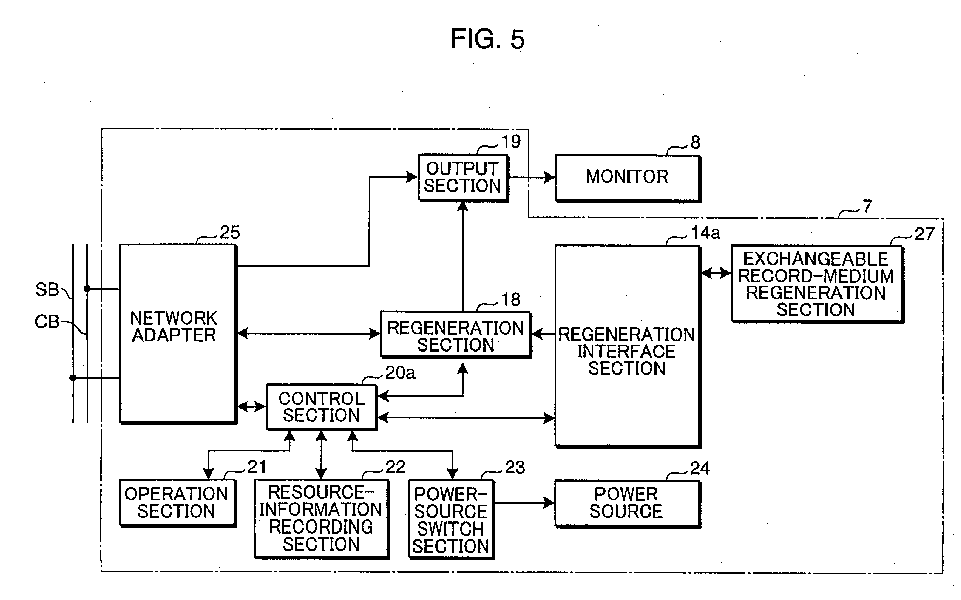

Fig. 5 is a block diagram, showing the configuration of the exchangeable record-medium regeneration unit 7 shown in Fig. 1. The exchangeable record-medium regeneration unit 7 shown in Fig. 5 includes: a regeneration interface section 14a; a regeneration section 18; an output section 19; a control section 20a; an operation section 21; a resource-information recording section 22; a power-source switch section 23; a power source 24; and an exchangeable record-medium regeneration section 27. Herein, in Fig. 5, each block of the exchangeable record-medium regeneration unit 7 is given the identical reference numeral and character to that of the same block in the exchangeable record-medium regeneration unit 3 shown in Fig. 2. Thus, their detailed description is omitted below.

The regeneration interface section 14a executed an interface between the regeneration section 18 and the exchangeable record-medium regeneration section 27. The regeneration section 18 receives, via the regeneration interface section 14a, the contents which are regenerated by the exchangeable record-medium regeneration section 27. Then, it outputs them to the output section 19 and the network adapter 25, and thereby, it controls a regeneration operation. For example, a DVD player is used as the exchangeable record-medium regeneration section 27. A DVD-ROM, a CD-ROM or the like is used as the exchangeable record medium for regeneration.

The output section 19 outputs, to the monitor 8, contents which are outputted from the regeneration section 18 and the network adapter 25, and displays them in it. The control section 20a manages, for each piece of equipment, the resource information which is stored in the resource-information recording section 22. In addition, it controls the operation of the regeneration interface section 14a, the regeneration section 18, the operation section 21 and the power-source switch section 23. Using the network adapter 25, the control section 20a transmits and receives a control signal to and from another piece of equipment.

In this embodiment, the exchangeable record-medium recording unit 3 and the monitor 4, the exchangeable record-medium recording unit 5 and the monitor 6, and the exchangeable record-medium regeneration unit 7 and the monitor 8, correspond to an example of the master equipment, the slave equipment, the exchangeable record-medium drive unit, or the contents regeneration unit. The resource-information recording section 22 corresponds to an example of the resource recording means; the network adapter 25, to an example of the communicating means, the connecting means, or the adapter means; and the control section 20, to an example of the managing means.

Furthermore, the power-source switch section 23 corresponds to an example of the power-source switching means; the operation section 21, to an example of the equipment-resource deletion accepting means, the operating means, the deletion accepting means, the reservation accepting means, or the picture-recording disability detecting means; the exchangeable record-medium recording section 15, the fixed record-medium recording section 16 and the memory-card recording section 17, to an example of the contents recording means; and the exchangeable record-medium recording unit 3 and the monitor 4, as well as the exchangeable record-medium recording unit 5 and the monitor 6, to an example of the contents recording unit, the first and second contents recording units, or the exchangeable record-medium recording unit.

Moreover, the recording section 13 corresponds to an example of the generating means, the change detecting means, or the commercial-message detecting means; the exchangeable record-medium recording section 15 and the memory-card recording section 17, to an example of the exchangeable record-medium recording means;the exchangeable record-medium recording section 15, the fixed record-medium recording section 16, the memory-card recording section 17 and exchangeable record-medium regeneration section 27, to an example of the contents regenerating means; the encrypting section 34, to an example of the encrypting means; the decrypting section 33, to an example of the decrypting means; the authentication section 26, to an example of the authenticating means; and the decoder 12, to an example of the decode means.

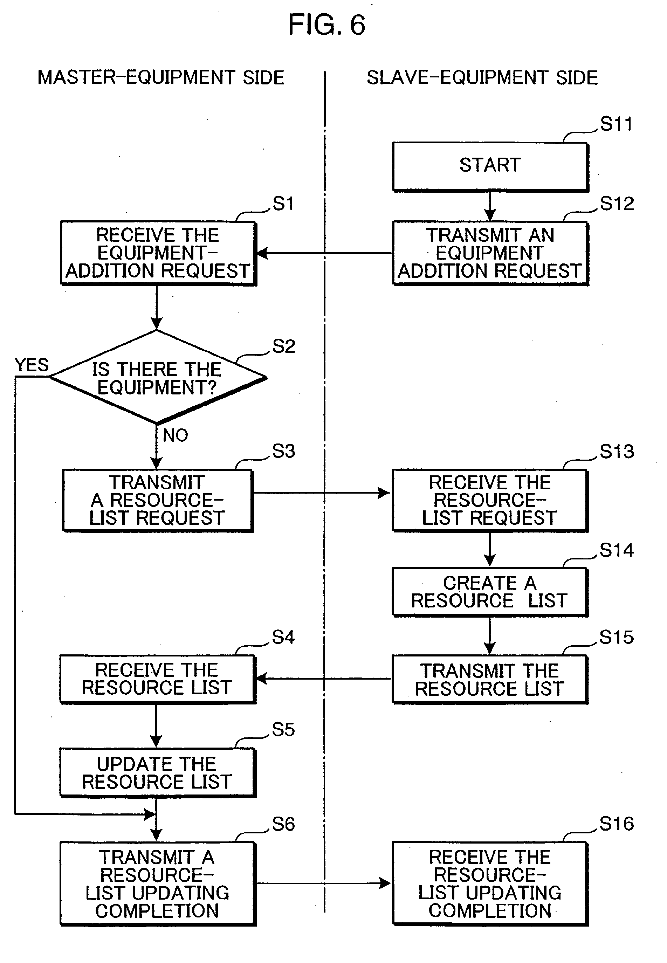

Next, various kinds of equipment management processing will be described in the equipment management system configured as described above. Fig. 6 is a flow chart, showing a resource-information addition processing in the equipment management system shown in Fig. 1.

As shown in Fig. 6, first, a user turns on the power source of the slave equipment (e.g., the exchangeable record-medium recording unit 5 and the monitor 6). In a step S11, the power-source switch section 23 switches the power source 24 to the ordinary power-source state. Then, the slave equipment starts.

Next, in a step S12, the control section 20 of the slave equipment reads, from the self-resource information recording section 42, equipment identification information on the slave equipment itself. Using the network adapter 25, it transmits an equipment addition request to add resource information on the slave equipment, together with the equipment identification information, to the master equipment (e.g., the exchangeable record-medium recording unit 3 and the monitor 4).

Next, in a step S1, the network adapter 25 of the master equipment receives the equipment identification information and the equipment addition request, and then, outputs them to the control section 20. In a step S2, the control section 20 decides whether or not the received equipment identification information is recorded in the slave-equipment resource-information recording section 43. If the equipment identification information is recorded, the processing shifts to a step S6. On the other hand, unless the equipment identification information is recorded, the processing shifts to a step S3.

Unless the equipment identification information is recorded, in the step S3, using the network adapter 25, the control section 20 transmits a resource-list request to the slave equipment. At this time, in a step S13, the network adapter 25 of the slave equipment receives the resource-list request, and then, outputs it to the control section 20. Next, in a step S14, the control section 20 reads, from the self-resource information recording section 42, equipment identification information and the resource information on the slave equipment itself. Then, it creates a resource list which includes them. Next, in the step S14, using the network adapter 25, the control section 20 transmits the resource list to the master equipment.

Next, in a step S4, the network adapter 25 of the master equipment receives the resource list, and then, outputs it to the control section 20. In a step S5, based on the received resource list, the control section 20 records the resource information on the slave equipment in the slave-equipment resource-information recording section 43, so that it corresponds to the equipment identification information on the slave equipment. Thereby, it updates the resource list.

Next, in a step S6, using the network adapter 25, the control section 20 transmits a resource-list updating completion to the slave equipment. This is also the same, even if the decision is made at the step S2 that the equipment identification information is recorded. At this time, in a step S16, the network adapter 25 of the slave equipment receives the resource-list updating completion, and then, outputs it to the control section 20. Then, the network adapter 25 cuts off the connection to the in-house network 9. In this way, the resource information on each piece of slave equipment is added, and thus, the master equipment can acquire the resource information on all the pieces of slave equipment.

Herein, instead of the above described start processing of the step S11, the following processing may also be executed. When a user operates the operation section 21 and switches the power-source state of the slave equipment from the ordinary power-source state to the sleep state, the control section 20 accepts a sleep-state switching instruction from the operation section 21. Or, when the master equipment switches the power-source state of the slave equipment from the ordinary power-source state to the sleep state, the control section 20 accepts a sleep-state switching instruction via the network adapter 25. Thereafter, the processing of the steps S12 to S15 by the slave equipment, and the processing of the steps S1 to S6 by the master equipment, are executed. Then, in the step S16, the network adapter 25 of the slave equipment receives the resource-list updating completion, and then, outputs it to the control section 20. Then, the power-source switch section 23 switches the power source 24 from the ordinary power-source state to the sleep state. In this case, even if the slave equipment is switched from the ordinary power-source state to the sleep state, the resource information on the slave equipment can be certainly transmitted to the master equipment. This makes it possible to surely manage the resource information on the slave equipment.

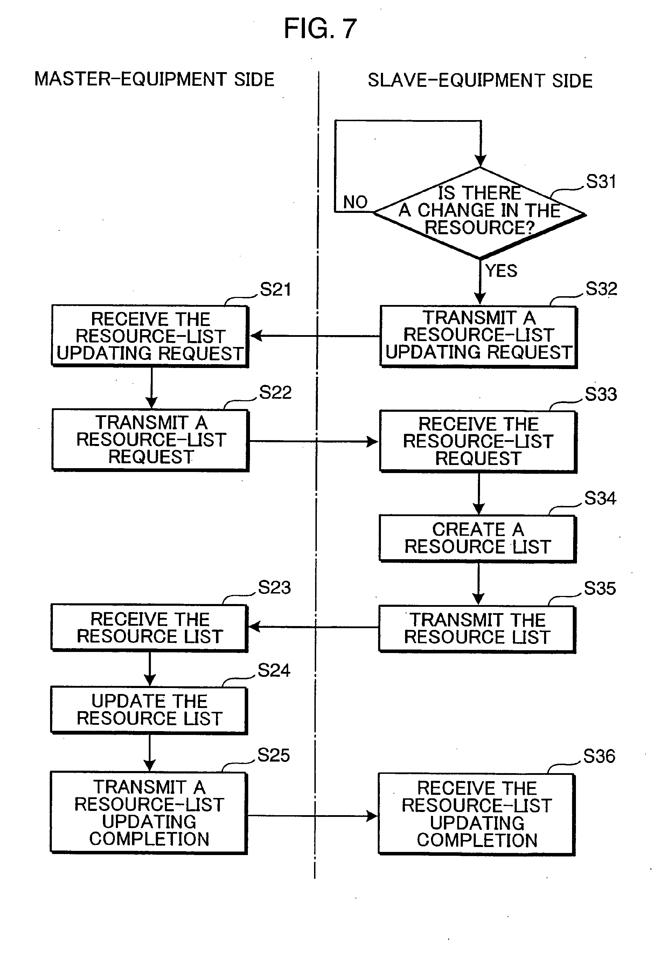

Fig. 7 is a flow chart, showing a resource updating processing in the equipment management system shown in Fig. 1. As shown in Fig. 7, first, in a step S31, the control section 20 of the slave equipment (e.g., the exchangeable record-medium recording unit 5 and the monitor 6) decides whether or not a change is made in the resource information which is stored in the self-resource information recording section 42 by the processing, such as the recording, movement and copying of contents (described later). If no change is made in the resource information, the processing of the step S31 is repeated. On the other hand, if a change is made in the resource information, the processing shifts to a step S32.

If a change is made in the resource information, in the step S32, using the network adapter 25, the control section 20 transmits a resource-list updating request for updating the resource information on the slave equipment and the equipment identification information, to the master equipment (e.g., the exchangeable record-medium recording unit 3 and the monitor 4).

Next, in a step S21, the network adapter 25 of the master equipment receives the equipment identification information and the resource-list updating request, and then, outputs them to the control section 20. In a step S22, in response to the received resource-list updating request, the control section 20 transmits a resource-list request to the slave equipment, using the network adapter 25. After this, the processing of steps S33 to S36 by the slave equipment, and the processing of steps S23 to S25 by the master equipment, are executed in the same way as the processing of the steps S13 to S16 by the slave equipment, and the processing of the steps S4 to S6 by the master equipment, which are shown in Fig. 6. In this way, in response to the resource-list updating request from each piece of slave equipment, the resource information on the slave equipment is updated in the master equipment. This allows the master equipment to update and manage the resource information on all the slave equipment.

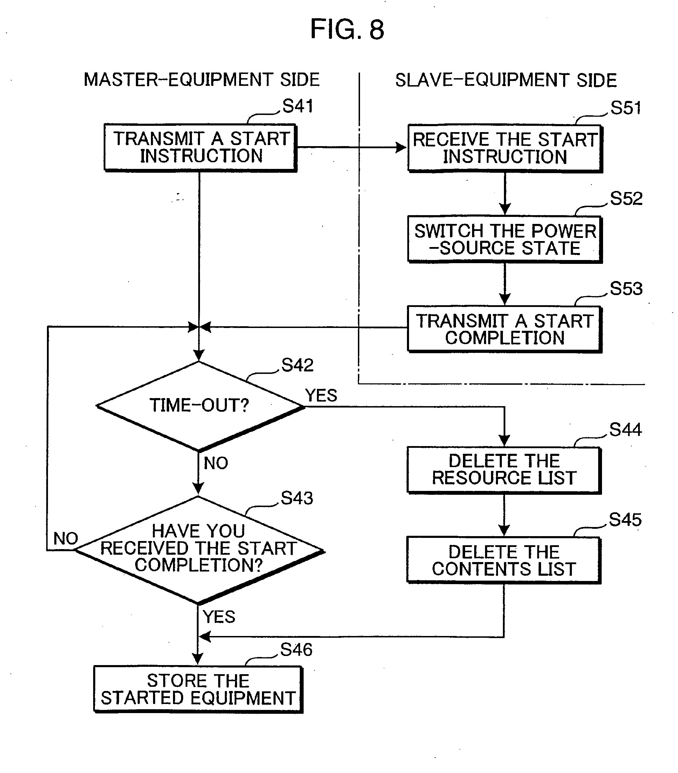

Fig. 8 is a flow chart, showing a diagnosis processing in the equipment management system shown in Fig. 1. As shown in Fig. 8, first, in a step S41, using the network adapter 25, the control section 20 of the master equipment (e.g., the exchangeable record-medium recording unit 3 and the monitor 4) transmits a start request to the slave equipment (e.g., the exchangeable record-medium recording unit 5 and the monitor 6). At this time, if the power source 24 is not completely turned off and stays in the sleep state, the network adapter 25 of the slave equipment receives the start request, and then, outputs it to the control section 20. Next, in a step S52, using the power-source switch section 23, the control section 20 of the slave equipment switches the power source 24 to the ordinary power-source state. Thereafter, in a step S53, using the network adapter 25, it transmits the equipment identification information as well as a start completion to the master equipment.

On the other hand, after the step S41 has been executed, in a step S42, the control section 20 of the master equipment decides whether or not a predetermined time has elapsed since it transmitted the start request. If the predetermined time has elapsed, the processing shifts to a step S44. On the other hand, unless the predetermined time has elapsed, the processing shifts to a step S43.

Unless the predetermined time has elapsed, in the step S43, using the network adapter 25, the control section 20 decides whether or not the start completion has been received from the slave equipment. If the start completion has been received, the processing shifts to a step S46. On the other hand, unless the start completion has been received, the processing of the step S42 is repeated.

On the other hand, if the predetermined time has elapsed, in the step S44, the control section 20 deletes, from the slave-equipment resource-information recording section 43, the resource list or resource information of the slave equipment which has not transmitted the start completion. Sequentially, in a step S45, it deletes, from the slave-equipment resource-information recording section 43, the contents list or contents identification-information list of the slave equipment which has not transmitted the start completion.

Thereafter, in a step S46, the control section 20 stores the slave equipment which is started by the above described processing. Then, the processing is completed. Hence, In this way, a diagnosis processing is executed, whether or not each piece of slave equipment can start. This allows the master equipment to manage the slave equipment which is now in operation.

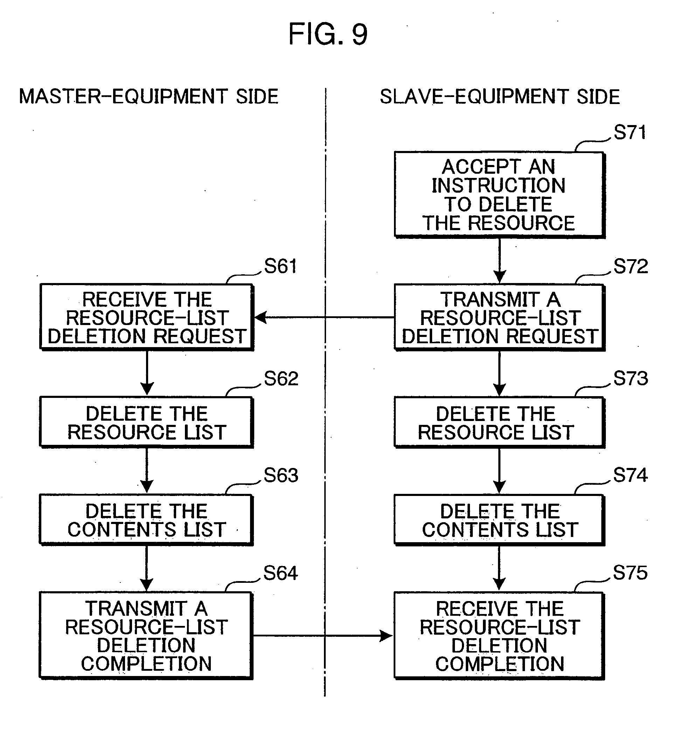

Fig. 9 is a flow chart, showing a resource deletion processing in the equipment management system shown in Fig. 1. As shown in Fig. 9, first, a user operates the operation section 21 and gives an instruction to delete the resource information. Then, in a step S71, the operation section 21 of the slave equipment (e.g., the exchangeable record-medium recording unit 5 and the monitor 6) accepts the resource deletion instruction and notifies the control section 20.

Next, in a step S72, using the network adapter 25, the control section 20 transmits a resource-list deletion request to delete the resource information of the slave equipment and the equipment identification information, to the master equipment (e.g., the exchangeable record-medium recording unit 3 and the monitor 4).

At this time, in a step S61, the network adapter 25 of the master equipment receives the equipment identification information and the resource-list deletion request. Then, it outputs them to the control section 20. In a step S62, the control section 20 deletes, from the slave-equipment resource-information recording section 43, the resource list or resource information of the slave equipment which has transmitted the resource-list deletion request. Sequentially, in a step S63, it deletes, from the slave-equipment resource-information recording section 43, the contents list or contents identification-information list of the slave equipment which has transmitted the resource-list deletion request.

In the same way, in the slave equipment, after the processing of the step S72 is completed, in a step S73, the control section 20 deletes the resource list or resource information of the slave equipment itself from the self-resource information recording section 42. Sequentially, in a step S74, it deletes the contents list or contents identification information of the slave equipment itself from the self-resource information recording section 42.

Next, in a step S64, using the network adapter 25, the control section 20 of the master equipment transmits a resource-list deletion completion to the slave equipment. At this time, in a step S75, the network adapter 25 of the slave equipment receives the resource-list deletion completion, and then, outputs it to the control section 20. Then, the network adapter 25 cuts off the connection to the in-house network 9. In this way, in response to the resource-list deletion request from each piece of slave equipment, the resource information on the slave equipment and the master equipment is deleted.

Herein, if the record area of the fixed record-medium recording section 16 or the like of the slave equipment becomes full, the contents which were earlier recorded, or other such contents, need to be automatically deleted. Thereby, a record area is freshly secured so that new contents can be recorded. In order to realize this, instead of the above described processing of the steps S71 and S72, using the network adapter 25, the control section 20 of the slave equipment transmits, to the master equipment, a resource-list deletion request for deleting the resource information on the slave equipment (which includes contents identification information on the contents to be deleted), as well as the equipment identification information. Thereafter, the processing of the steps S61 to S64 by the master equipment, and the processing of the steps S73 to S75 by the slave equipment, are executed. In this case, even if the contents of the slave equipment are automatically deleted, the contents identification information on all the pieces of equipment can be managed intensively and efficiently.

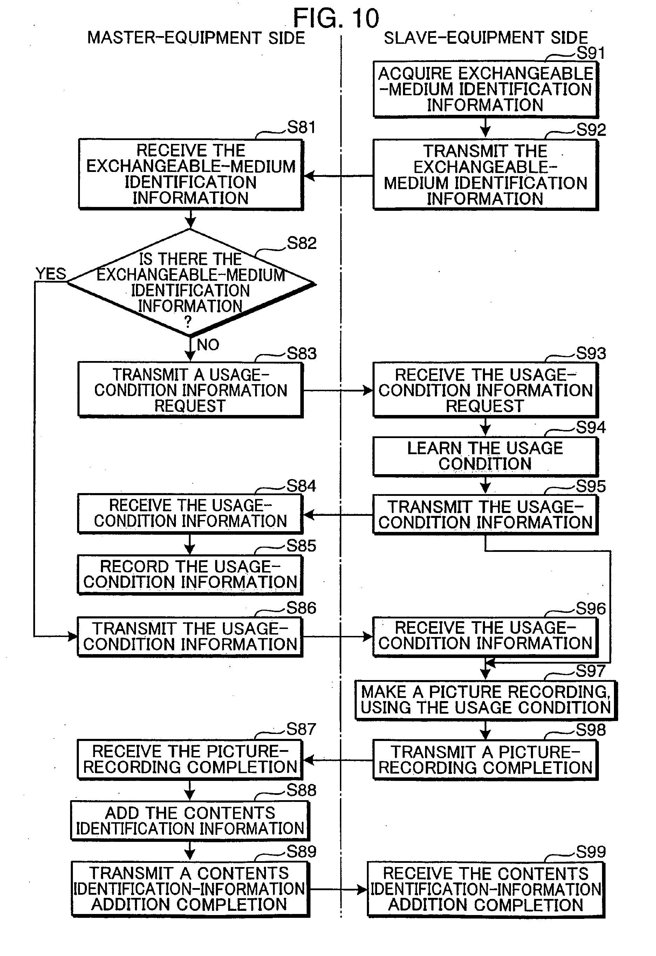

Fig. 10 is a flow chart, showing an exchangeable record-medium usage-condition sharing processing in the equipment management system shown in Fig. 1. As shown in Fig. 10, first, a user mounts an exchangeable record medium in the slave equipment (e.g., the exchangeable record-medium recording unit 5 and the monitor 6). Then, in a step S91, the regeneration section 18 regenerates the exchangeable record medium. Then, it acquires exchangeable record-medium identification information on the exchangeable record medium, and outputs it to the control section 20. Next, in a step S92, using the network adapter 25, the control section 20 transmits the equipment identification information as well as the exchangeable record-medium identification information, to the master equipment (e.g., the exchangeable record-medium recording unit 3 and the monitor 4).

Next, in a step S81, the network adapter 25 of the master equipment receives the equipment identification information and the exchangeable record-medium identification information. Then, it outputs them to the control section 20. In a step S82, the control section 20 decides whether or not the received exchangeable record-medium identification information is recorded in the exchangeable record-medium information recording section 44. If the exchangeable record-medium identification information is recorded, the processing shifts to a step S86. On the other hand, unless the exchangeable record-medium identification information is recorded, the processing shifts to a step S83.

Unless the exchangeable record-medium identification information is recorded, in the step S83, using the network adapter 25, the control section 20 transmits, to the slave equipment, a usage-condition information request for usage condition information of the exchangeable record medium. At this time, in a step S93, the network adapter 25 of the slave equipment receives the usage-condition information request, and then, outputs it to the control section 20. Next, in a step S94, the control section 20 instructs the regeneration section 18 to learn the usage condition information on the mounted exchangeable record medium. Then, in the step S94, the regeneration section 18 learns and acquires the usage condition information on the exchangeable record medium, and then, outputs it to the control section 20. Next, in a step S95, using the network adapter 25, the control section 20 transmits the exchangeable record-medium identification information and the usage condition information to the master equipment. Herein, the usage condition information is equivalent to, for example: recording-and-regeneration environmental information which includes information on the difference between the learning value of basic drive and the learning value of execution drive which is used to deal with the case where a learning value is different for each drive, or the like; condition information which shows how easily a regeneration can be made and how easily a recording can be made for each exchangeable record medium, or the like; an overwriting count value which shows how many times an overwriting has been executed in an exchangeable record medium; or the like.

Next, in a step S84, the network adapter 25 of the master equipment receives the exchangeable record-medium identification information and the usage condition information. Then, it outputs them to the control section 20. In a step S85, the control section 20 records the received usage condition information in the exchangeable record-medium information recording section 44, so that it corresponds to the exchangeable record-medium identification information. Thereby, it updates the resource list.

On the other hand, after the processing of the step S95 is completed, in a step S97, using the usage condition which has been learned in the step S94, the recording section 13 of the slave equipment records the picture of predetermined contents in the exchangeable record medium. After the picture recording by the recording section 13 is completed, the processing of steps S98 and S99 in the slave equipment, as well as the processing of steps S87 to S89 in the master equipment, are executed. Such processing will be described later.

On the other hand, if the decision is made that the exchangeable record-medium identification information is recorded in the step S82, in a step S86, the control section 20 reads the usage condition information on the exchangeable record medium from the exchangeable record-medium information recording section 44. Then, using the network adapter 25, it transmits the usage condition information on the exchangeable record medium to the slave equipment. At this time, in a step S93, the network adapter 25 of the slave equipment receives the usage-condition information request receives the usage condition information, and then, outputs it to the control section 20. Next, in a step S97, the control section 20 outputs the usage condition information to the recording section 13. Then, using the usage condition, the recording section 13 records the picture of the predetermined contents in the exchangeable record medium. After the recording section 13 has finished recording, in a step S98, the control section 20 transmits, to the master equipment, the contents identification information on the recorded contents, the equipment identification information and the exchangeable record-medium identification information, as well as a picture-recording completion for notifying it that the picture recording is completed. Herein, in this example, a picture-recording operation is illustrated, but a regeneration operation using the regeneration section 18 or the like is also executed in the same way.

Next, in a step S87, the network adapter 25 of the master equipment receives the contents identification information, the equipment identification information and the exchangeable record-medium identification information, as well as the picture-recording completion. Then, it outputs them to the control section 20. In a step S88, the control section 20 records the received contents identification information in the slave-equipment resource-information recording section 43, so that it corresponds to the equipment identification information and the exchangeable record-medium identification information. Thereby, it adds the contents identification information.

Next, in a step S89, using the network adapter 25, the control section 20 transmits a contents identification-information addition completion to the slave equipment. At this time, in a step S99, the network adapter 25 of the slave equipment receives the contents identification-information addition completion, and then, outputs it to the control section 20. Then, a shift is made to the sleep mode. In this way, the contents identification information which corresponds to the usage condition of an exchangeable record medium and the exchangeable record-medium identification information which is acquired by each piece of slave equipment is intensively managed in the master equipment. In addition, if the usage condition which has already been learned is managed in the master equipment, the slave equipment can use the usage condition which is transmitted from the master equipment, without learning it again. This makes it possible to share the usage condition of an exchangeable record medium among a plurality of pieces of equipment.

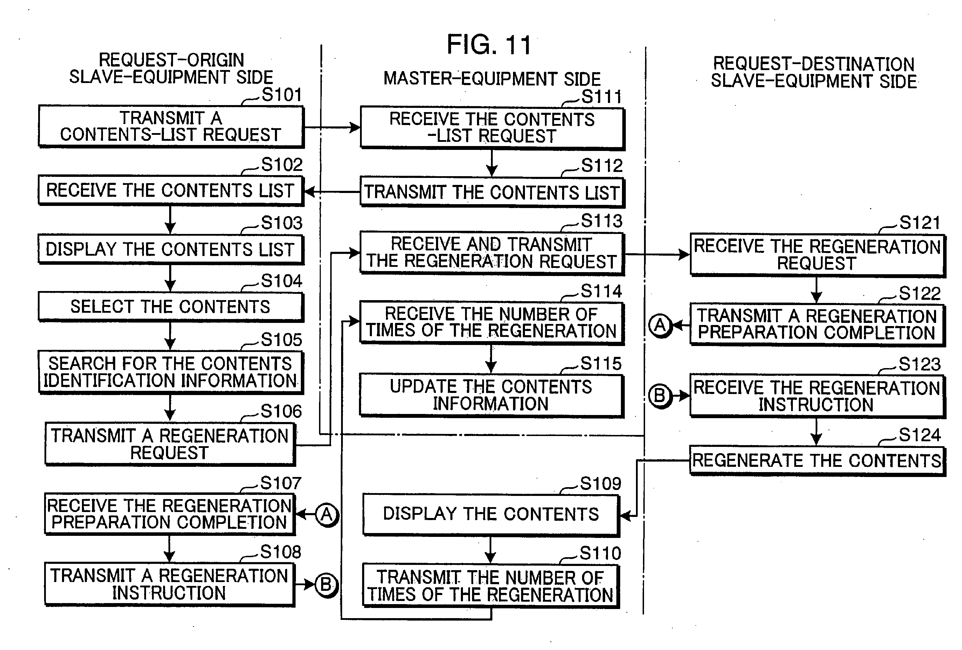

Fig. 11 is a flow chart, showing a contents forwarding regeneration processing for, in response to a request from a piece of slave equipment, forwarding and regenerating contents from another piece of slave equipment in the equipment management system shown in Fig. 1.

As shown in Fig. 11, first, a user operates request-origin slave equipment (e.g., the exchangeable record-medium recording unit 5 and the monitor 6), and requests a contents list. In a step S101, the operation section 21 of the request-origin slave equipment accepts the contents list request, and then, outputs it to the control section 20. Then, using the network adapter 25, the control section 20 transmits the contents list request, together with the equipment identification information, to the master equipment (e.g., the exchangeable record-medium recording unit 3 and the monitor 4).

Next, in a step S111, the network adapter 25 of the master equipment receives the equipment identification information and the contents list request, and then, outputs them to the control section 20. In a step S112, in response to the received contents list request, the control section 20 reads the contents identification information as well as the equipment identification information which are recorded in the slave-equipmentresource-information recording section 43. Using the network adapter 25, it transmits, to the request-origin slave equipment, the contents list which includes the contents identification information and the equipment identification information.

Next, in a step S102, the network adapter 25 of the request-origin slave equipment receives the contents list, and then, outputs it to the control section 20. Next, in a step S103, using the regeneration section 18 and the output section 19, the control section 20 allows the monitor 6 to display the received contents list. At this time, if a user chooses a program from among several programs using the operation section 21, in a step S104, the operation section 21 outputs, to the control section 20, contents identification information for specifying the program which has been chosen by the user. Thereby, the contents are selected.

Next, in a step S105, the control section 20 searches the contents list for the contents which have been chosen by the user, and specifies the contents identification information. In addition, it specifies equipment identification information on the slave equipment in which the contents are stored, or the request-origin slave equipment (e.g., the exchangeable record-medium regeneration unit 7 and the monitor 8). Next, using the network adapter 25, the control section 20 transmits, to the master equipment, the equipment identification information and the contents identification information, as well as a regeneration request for the regeneration of the contents. Herein, the processing of the above described steps S103 to S106 may also be executed in the master equipment. Besides, in a step S106, the regeneration request may also be directly transmitted from the request-origin slave equipment to the request-destination slave equipment.

Next, in a step S113, the network adapter 25 of the master equipment receives the equipment identification information and the contents identification information, as well as the regeneration request. Then, it outputs them to the control section 20. Next, the control section 20 refers to copyright management information which is recorded in the slave-equipment resource-information recording section 43. Thereby, it decides whether or not the contents whose regeneration request has been made can be regenerated, for example, whether or not the contents can be regenerated once or more times. If the number of times up to which they can be regenerated is 0, the control section 20 deletes, from the contents list, the contents identification information on the contents. On the other hand, if the number of times up to which they can be regenerated is 1 or more, then using the network adapter 25, it transmits the contents identification information and the regeneration request, to the slave equipment which is specified by the equipment identification information or the request-destination slave equipment. At this time, in a step S121, the network adapter 25 of the request-destination slave equipment receives the contents identification information and the regeneration request, and then, outputs them to the control section 20a. Next, in a step S122, after a regeneration preparation is completed, using the network adapter 25, the control section 20a transmits, to the request-origin slave equipment, a regeneration preparation completion for notifying it of the fact. Herein, a decision on whether or not the contents can be regenerated may also be made in the request-origin slave equipment.

Next, in a step S107, the network adapter 25 of the request-origin slave equipment receives the regeneration preparation completion, and then, it outputs it to the control section 20. In a step S108, using the network adapter 25, the control section 20 transmits a regeneration instruction to the request-destination slave equipment. At this time, in a step S123, the network adapter 25 of the request-destination slave equipment receives the regeneration instruction, and then, outputs it to the control section 20a. Next, in a step S124, using the regeneration section 18, the control section 20a regenerates the contents which are specified by the contents identification information which has been acquired at the step S121. Then, using the network adapter 25, it forwards a regeneration stream to the request-origin slave equipment.

Next, in a step S109, the network adapter 25 of the request-origin slave equipment receives the regeneration stream, and then, it outputs it to the regeneration section 18. Using the output section 19, the regeneration section 18 allows the monitor 6 to display the regenerated picture. Next, in a step S110, because the contents were once regenerated so that they are offered to a user, using the network adapter 25, the control section 20 transmits, to the master equipment, once as the number of times of regeneration. At this time, in a step S114, the network adapter 25 of the master equipment receives the number of times of regeneration (i.e., once), and then, outputs it to the control section 20. Then, in a step S115, the control section 20 subtracts one from the number of times up to which contents are permitted to be regenerated in the copyright management information which is recorded in the slave-equipment resource-information recording section 43. Thereby, it updates the contents-regeneration permission number-of-times.

As described above, in response to a request from one piece of slave equipment, contents are forwarded from another piece of slave equipment. Then, they are regenerated and displayed in the one piece of slave equipment. This makes it possible to efficiently use a plurality of pieces of equipment. In addition, the master equipment also intensively manages copyright management information, thereby making the management accurate.

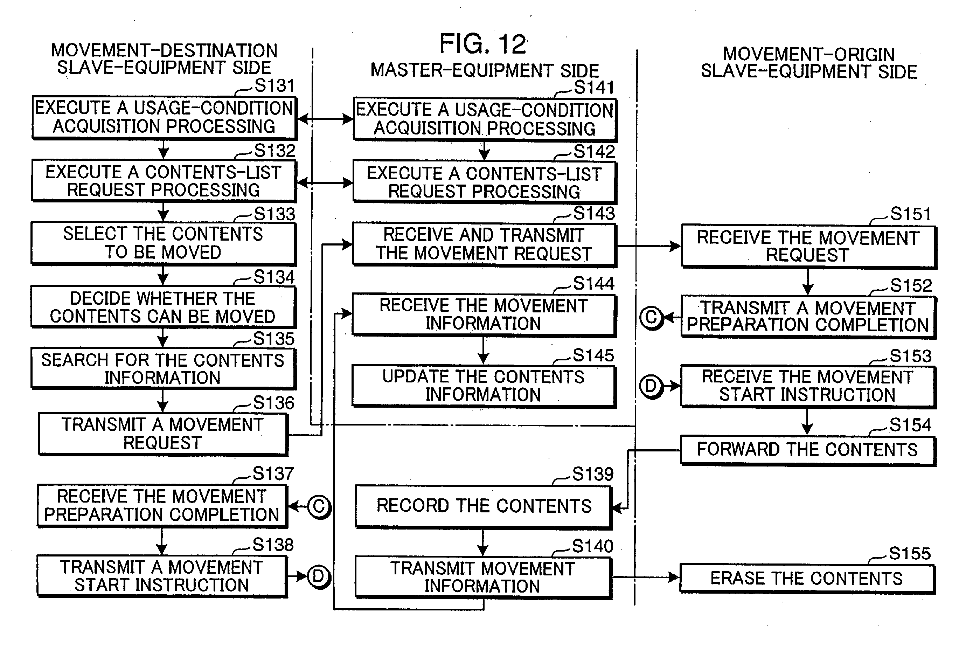

Fig. 12 is a flow chart, showing a contents movement processing for, in response to a request from a piece of slave equipment which is the exchangeable record-medium recording unit, moving contents from another piece of slave equipment in the equipment management system shown in Fig. 1. Herein, even in the case where a copy is made, almost the same is applied as the following.

As shown in Fig. 12, first, a user operates movement-destination slave equipment (e.g., the exchangeable record-medium recording unit 3 and the monitor 4), and requests the movement of contents to an exchangeable record medium. In steps S131 and S141, the movement-destination slave equipment and the master equipment (e.g., the exchangeable record-medium regeneration unit 7 and the monitor 8) execute a usage-condition acquisition processing in the steps S81 to S86 and the steps S91 to S96 shown in Fig. 10. On the other hand, in steps S132 and S142, they execute a contents-list require processing of the steps S101 to S103 and the steps S111 and S112 shown in Fig. 11.

Next, the user chooses one from among several kinds of contents using the operation section 21, in a step S133, the operation section 21 of the movement-destination slave equipment outputs, to the control section 20, contents identification information for specifying the contents which have been chosen by the user. Thereby, the contents to be moved are selected.

Next, in a step S134, using the regeneration section 18, the control section 20 reads copyright management information from the exchangeable record medium. Then, it decides whether the contents which have been chosen by the user can move or not. If they can move, in a step S135, it searches the contents identification information for the contents which have been chosen by the user, and specifies the contents identification information. In addition, it specifies equipment identification information on the slave equipment in which the contents are stored, or the movement-origin slave equipment (e.g., the exchangeable record-medium recording unit 5 and the monitor 6). Next, in a step S136, using the network adapter 25, the control section 20 transmits, to the master equipment, the equipment identification information and the contents identification information, as well as a movement request for the movement of the contents. Herein, the processing of the above described steps S133 to S136 may also be executed in the master equipment.

Next, in a step S143, the network adapter 25 of the master equipment receives the equipment identification information and the contents identification information, as well as the movement request. Then, it outputs them to the control section 20. Using the network adapter 25, the control section 20 transmits the contents identification information and the movement request to the slave equipment which is specified by the equipment identification information or the movement-origin slave equipment. At this time, in a step S151, the network adapter 25 of the movement-origin slave equipment receives the contents identification information and the movement request. Then, it outputs them to the control section 20. Next, in a step S152, after a movement preparation is completed, using the network adapter 25, the control section 20 transmits, to the movement-destination slave equipment, a movement preparation completion for notifying it of the fact.

Next, in a step S137, the network adapter 25 of the movement-destination slave equipment receives the movement preparation completion, and then, it outputs it to the control section 20. In a step S138, using the network adapter 25, the control section 20 transmits a movement start instruction to the movement-origin slave equipment. At this time, in a step S153, the network adapter 25 of the movement-origin slave equipment receives the movement start instruction, and then, outputs it to the control section 20. Next, in a step S154, using the regeneration section 18, the control section 20 regenerates the contents which are specified by the contents identification information which has been acquired at the step S151. Then, using the network adapter 25, it forwards a regeneration stream to the movement-destination slave equipment.

Next, in a step S139, the network adapter 25 of the movement-destination slave equipment receives the regeneration stream, and then, it outputs it to the recording section 13. Then, the recording section 13 allows the exchangeable record-medium recording section 15 to record the contents. Next, in a step S140, using the network adapter 25, the control section 20 transmits, to the movement-origin slave equipment, a contents-movement completion notification for notifying it that the movement of the contents is completed. In addition, because the contents were moved once, it transmits once as the number of times of movement to the master equipment.

At this time, in a step S155, the network adapter 25 of the movement-origin slave equipment receives the contents-movement completion notification, and then, outputs it to the control section 20. Using the recording section 13, the control section 20 erases the forwarded contents. Herein, in the case where a copy is made, the erasure of contents are not executed in the movement-origin slave equipment.

Furthermore, in a step S144, the network adapter 25 of the master equipment receives the number of times of movement (i.e., once), and then, outputs it to the control section 20. Then, in a step S145, the control section 20 subtracts one from the number of times up to which contents are permitted to be moved in the copyright management information which is recorded in the slave-equipment resource-information recording section 43. Thereby, it updates the contents-movement permission number-of-times. As described above, in response to a request from one piece of slave equipment which is the exchangeable record-medium recording unit, contents are forwarded from another piece of slave equipment and are moved to the exchangeable record medium. In this case, the master equipment also intensively manages copyright management information, thereby making the management accurate.

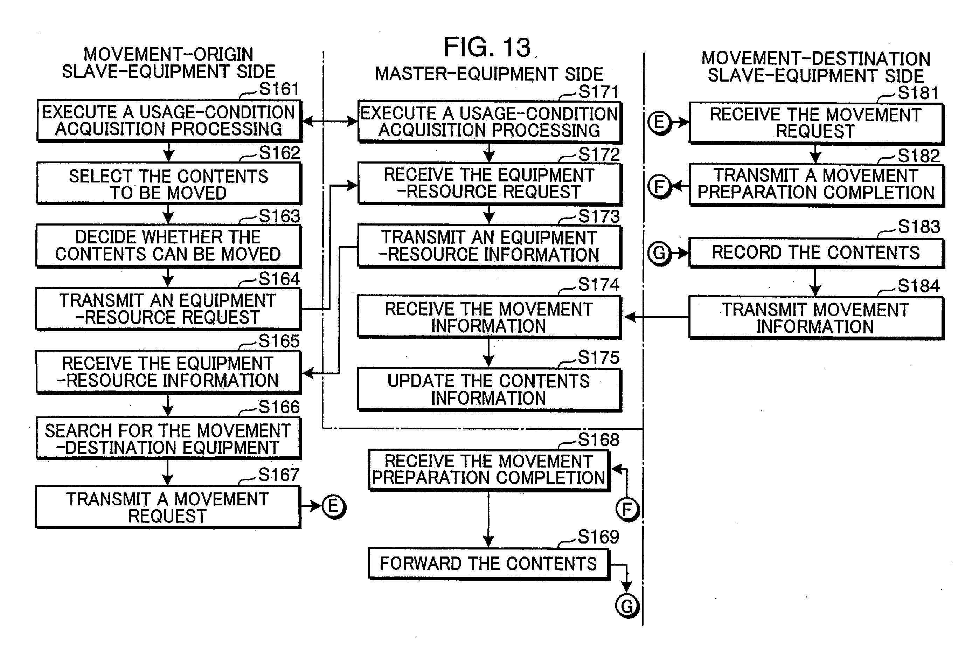

Fig. 13 is a flow chart, showing a contents movement processing for moving contents from a piece of slave equipment which is the exchangeable record-medium recording unit to another piece of slave equipment in the equipment management system shown in Fig. 1. Herein, even in the case where a copy is made, almost the same is applied as the following.

As shown in Fig. 13, first, a user requests the movement, to movement-destination slave equipment, of the contents of an exchangeable record medium which is mounted in movement-origin slave equipment (e.g., the exchangeable record-medium recording unit 5 and the monitor 6). Then, in steps S161 and S171, the movement-origin slave equipment and the master equipment (e.g., the exchangeable record-medium regeneration unit 7 and the monitor 8) execute the usage-condition acquisition processing in the steps S81 to S86 and the steps S91 to S96 shown in Fig. 10.

Next, the user chooses one from among several kinds of contents using the operation section 21, in a step S162, the operation section 21 of the movement-origin slave equipment outputs, to the control section 20, contents identification information for specifying the contents which have been chosen by the user. Thereby, the contents to be moved are selected. Next, in a step S163, using the regeneration section 18, the control section 20 reads copyright management information from the exchangeable record medium. Then, it decides whether the contents which have been chosen by the user can move or not. If they can move, in a step S164, using the network adapter 25, the control section 20 transmits, to the master equipment (e.g., the exchangeable record-medium regeneration unit 7 and the monitor 8), an equipment resource request for equipment resource information, together with the equipment identification information.

Next, in a step S172, the network adapter 25 of the master equipment receives the equipment identification information and the equipment resource request, and then, outputs them to the control section 20. In a step S173, in response to the received equipment resource request, the control section 20 reads the equipment resource information as well as the equipment identification information which are recorded in the slave-equipment resource-information recording section 43. Using the network adapter 25, it transmits them to the movement-origin slave equipment.

Next, in a step S165, the network adapter 25 of the movement-origin slave equipment receives the equipment resource information and the equipment identification information. Then, it outputs them to the control section 20. Next, in a step S166, it searches the received equipment resource information for the movement-destination slave equipment which can move the contents, and specifies equipment identification information on that equipment. Next, in a step S167, using the network adapter 25, the control section 20 transmits, to the movement-destination slave equipment, the equipment identification information and the contents identification information, as well as a movement request for the movement of the contents.

Next, in a step S181, the network adapter 25 of the movement-destination slave equipment receives the contents identification information and the movement request. Then, it outputs them to the control section 20. Next, in a step S182, after a movement preparation is completed, using the network adapter 25, the control section 20 transmits, to the movement-origin slave equipment, a movement preparation completion for notifying it of that fact.

Next, in a step S168, the network adapter 25 of the movement-origin slave equipment receives the movement preparation completion, and then, outputs it to the control section 20. Then, in a step S169, using the regeneration section 18, the control section 20 regenerates the contents which have been chosen at the step S162, and erases them using the recording section 13. Then, using the network adapter 25, it forwards a regeneration stream to the movement-destination slave equipment.

Next, in a step S183, the network adapter 25 of the movement-destination slave equipment receives the regeneration stream, and then, it outputs it to the recording section 13. Using the output section 19, the recording section 13 allows the exchangeable record-medium recording section 15 to record the contents. Next, in a step S184, because the contents were moved once, using the network adapter 25, the control section 20 transmits once as the number of times of movement to the master equipment. At this time, in a step S174, the network adapter 25 of the master equipment receives the number of times of movement (i.e., once), and then, outputs it to the control section 20. Then, in a step S175, the control section 20 subtracts one from the number of times up to which contents are permitted to be moved in the copyright management information which is recorded in the slave-equipment resource-information recording section 43. Thereby, it updates the contents-movement permission number-of-times. As described above, even in the case where the contents are forwarded and moved from the exchangeable record medium of one piece of slave equipment which is the exchangeable record-medium recording unit to another piece of slave equipment, the master equipment also intensively manages copyright management information, thereby making the management accurate.

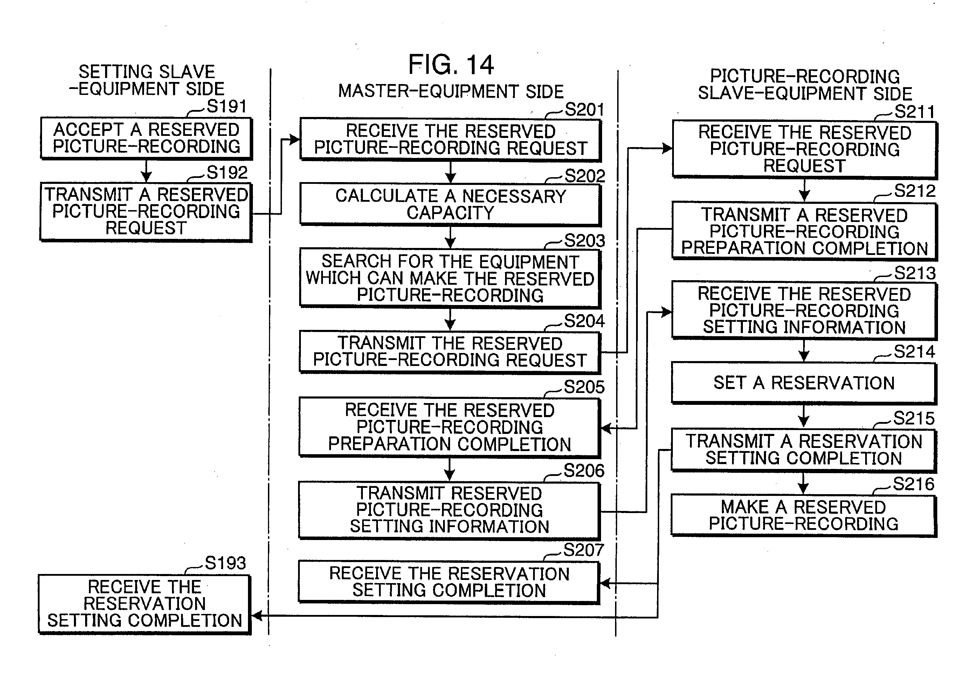

Fig. 14 is a flow chart, showing a reserved picture-recording processing for, in response to a reserved picture-recording setting by a piece of slave equipment, making a picture recording using another piece of slave equipment in the equipment management system shown in Fig. 1. As shown in Fig. 14, first, a user sets a reserved picture-recording, using the operation section 21 of slave equipment for setting (e.g., the exchangeable record-medium regeneration unit 7 and the monitor 8). Then, in a step S191, the operation section 21 of the setting slave equipment accepts a reserved picture-recording setting information, and outputs it to the control section 20a. In a step S192, using the network adapter 25, the control section 20a transmits, to the master equipment (e.g., the exchangeable record-medium recording unit 3 and the monitor 4), the reserved picture-recording setting information as well as a reserved picture-recording request for reserved picture-recording.

Next, in a step S201, the network adapter 25 of the master equipment receives the reserved picture-recording setting information and the reserved picture-recording request. Then, it outputs them to the control section 20. Then, in a step S202, using the time when a program starts and the time when it ends which are included in the reserved picture-recording setting information, the control section 20 calculates the capacity of data required to record the program. Next, in a step S203, the control section 20 refers resource information which is recorded in the slave-equipment resource-information recording section 43, for example, the empty capacity of a fixed record medium, whether or not an exchangeable record medium is mounted, and the empty capacity of an exchangeable record medium. Then, it searches for equipment which can record the picture at the data capacity it has calculated. Sequentially, in a step S204, using the network adapter 25, it transmits the reserved picture-recording request to the slave equipment which has been obtained by the search, or the slave equipment for picture-recording.

Next, in a step S211, the network adapter 25 of the picture-recording slave equipment receives the reserved picture-recording request, and then, outputs it to the control section 20. Next, in a step S212, after a picture-recording preparation is completed, using the network adapter 25, the control section 20 transmits, to the master equipment, a reserved picture-recording preparation completion for notifying it of that fact.

Next, in a step S205, the network adapter 25 of the master equipment receives the reserved picture-recording preparation completion, and then, outputs it to the control section 20. Then, in a step S206, using the network adapter 25, the control section 20 transmits the reserved picture-recording setting information to the picture-recording slave equipment. At this time, in a step S213, the network adapter 25 of the picture-recording slave equipment receives the reserved picture-recording setting information, and then, outputs it to the control section 20. Next, in a step S214, based on the reserved picture-recording setting information, the control section 20 executes a reservation setting in the recording section 13. Thereafter, in a step S215, using the network adapter 25, it transmits, to the master equipment and the setting slave equipment, a reservation setting completion for notifying it that the reservation setting is completed. Next, in a step S207, the network adapter 25 of the master equipment receives the reservation setting completion, and then, outputs it to the control section 20. Then, in a step S193, the setting slave equipment receives the reservation setting completion.

Thereafter, when the time comes to start the reserved program, in a step S216, the recording section 13 of the picture-recording slave equipment records the picture of the program according to the reserved picture-recording setting information. If necessary, the resource updating processing shown in Fig. 7 is executed (not shown), and the processing is completed. In this way, in response to a reserved picture-recording setting by a piece of slave equipment, a reserved picture-recording can be made using another piece of slave equipment.

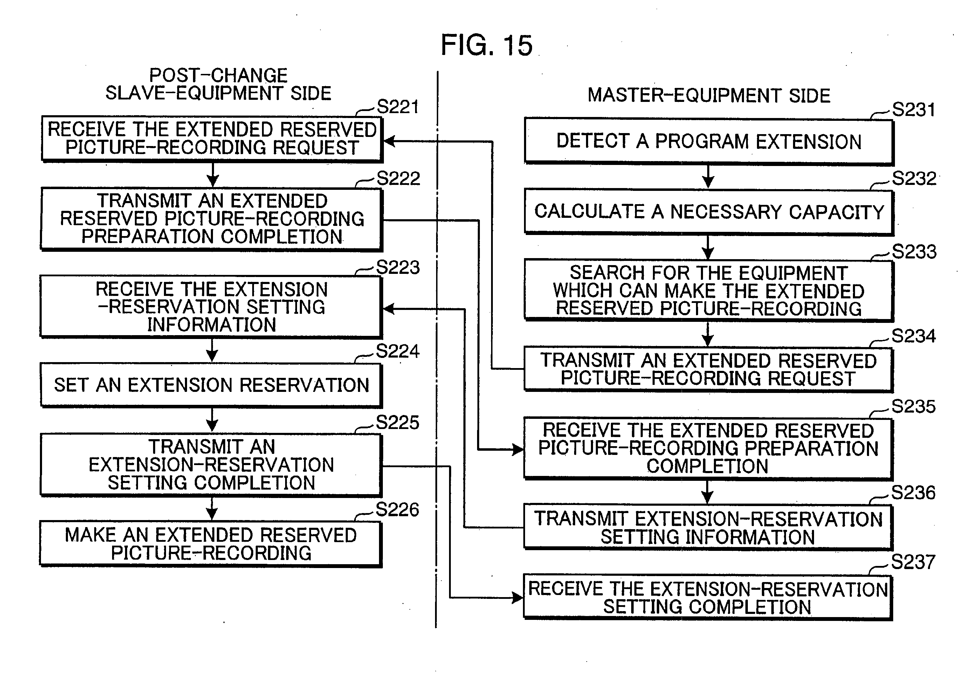

Next, an extended reserved picture-recording processing will be described in which if the broadcasting time of the program is changed after the above described reserved picture-recording processing is executed, a picture recording is made using another piece of equipment. Fig. 15 is a flow chart, showing an extended reserved picture-recording processing in the case where the broadcasting time of a program is changed in the equipment management system shown in Fig. 1.

As shown in Fig. 15, after the reservation setting completion has been received in the step S207, in the step S231, using the network adapter 25, the recording section 13 of the master equipment receives electronic program information from the information provision server 51. Then, it detects a change in the broadcasting time of the program, and notifies the control section 20.

Next, in a step S232, based on the picture quality (i.e., forwarding rate) of an extended part of the program, its starting time and ending time, the control section 20 calculates the capacity of data required to record the extended part of the program. Next, in a step S233, the control section 20 refers resource information which is recorded in the slave-equipment resource-information recording section 43 and searches for equipment which can record the picture at the data capacity it has calculated. Sequentially, in a step S234, using the network adapter 25, it transmits an extended reserved picture-recording request to the slave equipment which has been obtained by the search, or a post-change slave equipment. Herein, for example, if equipment which is equal to the exchangeable record-medium recording unit 3 and the monitor 4 is further connected to the equipment management system shown in Fig. 1, such equipment is equivalent to the post-change slave equipment.

Next, in a step S221, the network adapter 25 of the post-change slave equipment receives the extended reserved picture-recording request, and then, outputs it to the control section 20. Next, in a step S222, after an extended reserved picture-recording preparation is completed, using the network adapter 25, the control section 20 transmits, to the master equipment, an extended reserved picture-recording preparation completion for notifying it of that fact.

Next, in a step S235, the network adapter 25 of the master equipment receives the extended reserved picture-recording preparation completion, and then, outputs it to the control section 20. Then, in a step S236, using the network adapter 25, the control section 20 transmits, to the post-change slave equipment, extended reserved picture-recording setting information for recording the picture of the extended part of the program. At this time, in a step S223, the network adapter 25 of the post-change slave equipment receives the extended reserved picture-recording setting information, and then, outputs it to the control section 20. Next, in a step S224, based on the extended reserved picture-recording setting information, the control section 20 executes an extension reservation setting in the recording section 13. Thereafter, in a step S225, using the network adapter 25, it transmits, to the master equipment, an extension-reservation setting completion for notifying it that the extension reservation setting is completed. Next, in a step S237, the network adapter 25 of the master equipment receives the extension-reservation setting completion, and then, outputs it to the control section 20.

Thereafter, when the time comes to start the reserved program, in a step S226, the recording section 13 of the post-change slave equipment records the picture of the extended part of the program according to the extended reserved picture-recording setting information. If necessary, the resource updating processing shown in Fig. 7 is executed (not shown), and the processing is completed. In this way, even if the broadcasting time of the program is changed after the reserved picture-recording processing is executed, the picture of the extended part of the program is recorded using another piece of equipment. In addition, based on the contents list, the program whose reserved picture-recording is ordinarily made and the program whose picture recording is extensively made can be managed as a set of contents. Then, they can be offered to a user in such a way. This allows the user to watch and listen to the program, without noticing that it is recorded by several pieces of equipment, not by a single piece.

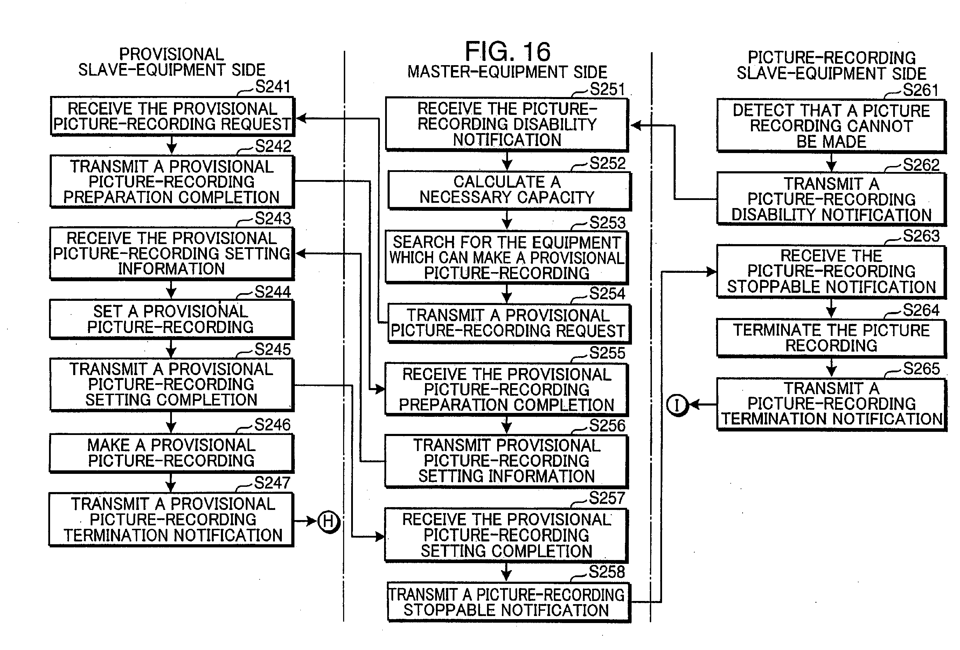

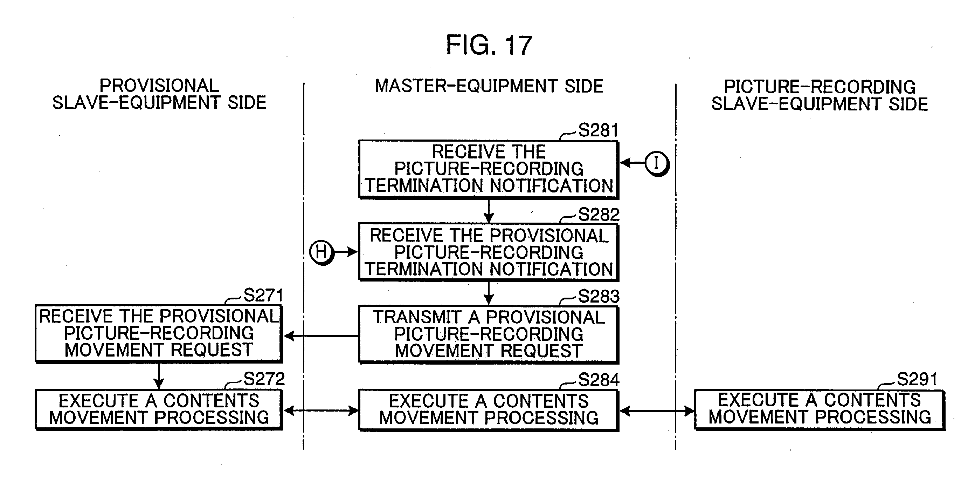

Next, a provisional picture-recording processing will be described in which if slave equipment for picture recording cannot make a picture recording after the above described reserved picture-recording processing is executed, for example, if a high-priority operation instruction (i.e., an instruction to regenerate the contents which are recorded only in that equipment) or the like is given to the picture-recording slave equipment, the whole or a part of a program which cannot be recorded is recorded using another piece of equipment. Fig. 16 and Fig. 17 are first and second flow charts, showing a provisional picture-recording processing in the case where slave equipment for picture recording cannot make a picture recording in the equipment management system shown in Fig. 1.

As shown in Fig. 16, after the master equipment has received the reservation setting completion in the step S207, in the step S231, a user gives a high-priority operation instruction using the operation section 21. In this case, in a step S261, the operation section 21 of the picture-recording slave equipment detects a state in which a picture recording cannot be made, and notifies the control section 20. Then, in a step S262, using the network adapter 25, the control section 20 transmits a picture-recording disability notification to the master equipment. Herein, the master equipment may also inquire of the picture-recording slave equipment whether a picture recording cannot be made. In that case, the picture-recording disability notification is transmitted from the picture-recording slave equipment.

Next, in a step S251, the network adapter 25 of the master equipment receives the picture-recording disability notification, and then, outputs it to the control section 20. Next, in a step S252, based on the starting time and ending time of the remaining part of the program (the whole or a part of the program which cannot be recorded), the control section 20 calculates the capacity of data required to record the rest of the program. Next, in a step S253, the control section 20 refers resource information which is recorded in the slave-equipment resource-information recording section 43 and searches for equipment which can record the picture at the data capacity it has calculated. Sequentially, in a step S254, using the network adapter 25, it transmits a provisional picture-recording request to the slave equipment which has been obtained by the search, or a provisional slave equipment. Herein, for example, if equipment which is equal to the exchangeable record-medium recording unit 3 and the monitor 4 is further connected to the equipment management system shown in Fig. 1, such equipment is equivalent to the provisional slave equipment.

Next, in a step S241, the network adapter 25 of the provisional slave equipment receives the provisional picture-recording request, and then, outputs it to the control section 20. Next, in a step S242, after a provisional picture-recording preparation is completed, using the network adapter 25, the control section 20 transmits, to the master equipment, a provisional picture-recording preparation completion for notifying it of that fact.

Next, in a step S255, the network adapter 25 of the master equipment receives the provisional picture-recording preparation completion, and then, outputs it to the control section 20. Then, in a step S256, using the network adapter 25, the control section 20 transmits, to the provisional slave equipment, provisional picture-recording setting information for recording the picture of the remaining part of the program. At this time, in a step S243, the network adapter 25 of the provisional slave equipment receives the provisional picture-recording setting information, and then, outputs it to the control section 20. Next, in a step S244, based on the provisional picture-recording setting information, the control section 20 executes a provisional picture-recording setting in the recording section 13. Thereafter, in a step S245, using the network adapter 25, it transmits, to the master equipment, a provisional picture-recording setting completion for notifying it that the provisional picture-recording setting is completed. Next, in a step S246, the control section 20 controls the recording section 13 and makes a provisional picture recording. Then, after the provisional picture recording is completed, in a step S247, using the network adapter 25, the control section 20 transmits a provisional picture-recording termination notification to the master equipment.

Herein, in the master equipment, in a step S257, the network adapter 25 receives the provisional picture-recording setting completion, and then, outputs it to the control section 20. Next, in a step S258, using the network adapter 25, the control section 20 transmits, to the picture-recording slave equipment, a picture-recording stoppable notification for notifying it that the picture recording can be stopped.

Next, in a step S263, the network adapter 25 of the picture-recording slave equipment receives the picture-recording stoppable notification, and then, outputs it to the control section 20. Next, in a step S264, the control section 20 controls the recording section 13 and terminates the picture recording. Then, in a step S265, using the network adapter 25, it transmits a picture-recording termination notification to the master equipment.

Next, with reference to Fig. 17, in a step S281, the network adapter 25 of the master equipment receives the picture-recording termination notification, and then, outputs it to the control section 20. Thereafter, in a step S282, the network adapter 25 receives the provisional picture-recording termination notification,and then,outputs it to the control section 20.

Thereafter, in the provisional slave equipment and the picture-recording slave equipment, if the contents or the rest of the program whose picture is provisionally recorded by the provisional slave equipment can be moved to the picture-recording slave equipment, in a step S283, using the network adapter 25, the control section 20 transmits, to the provisional slave equipment, a provisional picture-recording movement request for the movement of the rest of the program to the picture-recording slave equipment. At this time, in a step S271, the network adapter 25 of the provisional slave equipment receives the provisional picture-recording movement request, and then, outputs it to the control section 20. Next, in steps S272, S284 and S291, the contents movement processing shown in Fig. 12 or the like are executed. Thereby, the remaining part of the program moves from the provisional slave equipment to the picture-recording slave equipment, so that each parts of the program merge into one. As described above, even if the picture-recording slave equipment cannot make a picture recording, another piece of slave equipment can make a picture recording of the rest. Besides, the remaining part can be automatically moved so that the program can be recorded in a single piece of equipment.

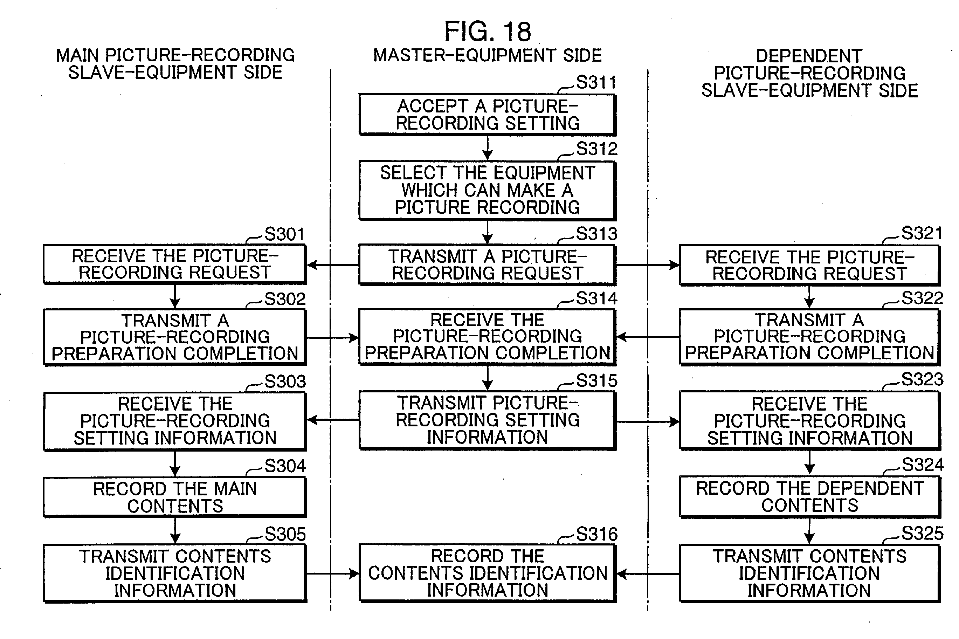

Fig. 18 is a flow chart, showing a backup picture-recording processing for recording the picture of a set of contents as main contents and dependent contents in the equipment management system shown in Fig. 1. As shown in Fig. 18, first, a user sets a picture recording of a set of contents, using the operation section 21 of the master equipment (e.g., the exchangeable record-medium regeneration unit 7 and the monitor 8). Then, in a step S311, the operation section 21 of the master equipment accepts a picture-recording setting information, and outputs it to the control section 20a. In a step S312, the control section 20a refers resource information which is recorded in the slave-equipment resource-information recording section 43, and searches for equipment which can make a picture recording of, as main contents and dependent contents, the contents which are specified by the picture-recording setting information, in other words, main picture-recording slave equipment which makes a picture recording of the main contents and dependent picture-recording slave equipment which makes a picture recording of the dependent contents.

Next, in a step S313, using the network adapter 25, the control section 20a transmits, to the main picture-recording slave equipment (e.g., the exchangeable record-medium recording unit 3 and the monitor 4), a picture-recording request to make a picture recording of the main contents in a first recording format, for example, in an MPEG 2. On the other hand, it transmits, to the dependent picture-recording slave equipment (e.g., the exchangeable record-medium recording unit 5 and the monitor 7), a picture-recording request to make a picture recording of the dependent contents in a second recording format, for example, in an MPEG 4.

Herein, in the main picture-recording slave equipment, in a step S301, the network adapter 25 receives the picture-recording request, and then, outputs it to the control section 20. Next, in a step S302, after a picture-recording preparation is completed, using the network adapter 25, the control section 20 transmits, to the master equipment, a picture-recording preparation completion for notifying it of that fact. Similarly, in the dependent picture-recording slave equipment, in a step S321, the network adapter 25 receives the picture-recording request, and then, outputs it to the control section 20. Next, in a step S322, after a picture-recording preparation is completed, using the network adapter 25, the control section 20 transmits, to the master equipment, a picture-recording preparation completion for notifying it of that fact.

Next, in a step S314, respectively, the network adapter 25 of the master equipment receives the picture-recording preparation completion, and then, outputs it to the control section 20. Then, in a step S315, using the network adapter 25, the control section 20 transmits picture-recording setting information to the main picture-recording slave equipment and the dependent picture-recording slave equipment, respectively.

At this time, in the main picture-recording slave equipment, in a step S303, the network adapter 25 receives the picture-recording setting information, and then, outputs it to the control section 20. Next, in a step S304, the control section 20 controls the recording section 13 so that the exchangeable record-medium recording section 15 records the contents in the MPEG 2. Thereby, the picture of the main contents is recorded. After the picture recording is completed, in a step S305, using the network adapter 25, the control section 20 transmits, to the master equipment, contents identification information which shows that the main contents have been recorded in the MPEG 2 in an exchangeable record medium.

In the same way, in the dependent picture-recording slave equipment, in a step S323, the network adapter 25 receives the picture-recording setting information, and then, outputs it to the control section 20. Next, in a step S324, the control section 20 controls the recording section 13 so that the memory-card recording section 17 records the contents in the MPEG 4. Thereby, the picture of the dependent contents is recorded. After the picture recording is completed, in a step S325, using the network adapter 25, the control section 20 transmits, to the master equipment, contents identification information which shows that the dependent contents have been recorded in the MPEG 4 in a memory card.

Next, in a step S316, the network adapter 25 of the master equipment receives each piece of contents identification information, and then, outputs it to the control section 20a. Then, the control section 20a records each piece of contents identification information in the slave-equipment resource-information recording section 43. Thereby, it updates the contents identification information. As described above, the contents which have the same contents are recorded as the main contents and the dependent contents and are managed by the single piece of contents identification information. According to this configuration, either of the main contents and the dependent contents can be used as a backup for the other.

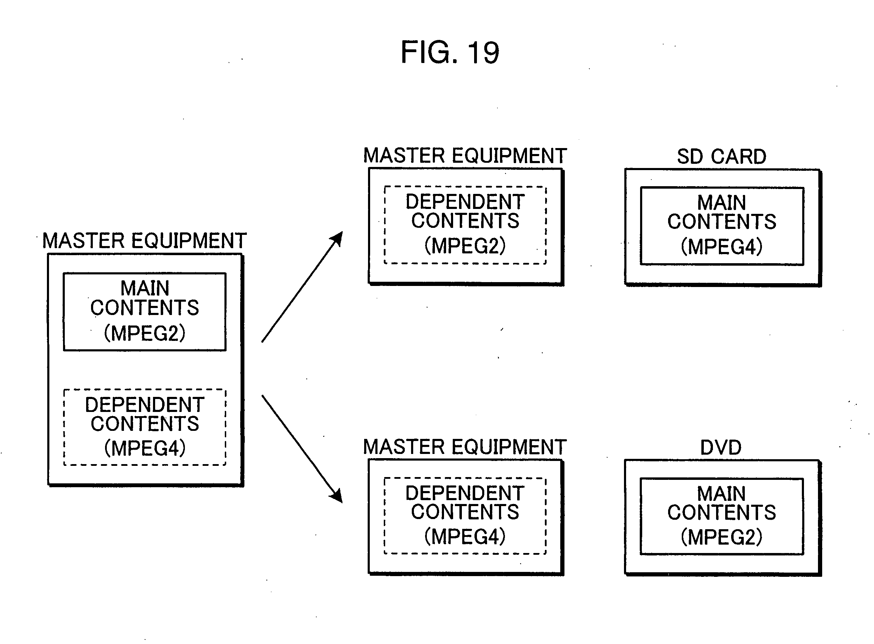

Fig. 19 is a schematic representation, showing the relation between main contents and dependent contents. For example, as shown in Fig. 19, the main contents of the MPEG 2 and the dependent contents of the MPEG 4 are entered in a contents list of the master equipment. In this case, the main contents are managed as an ordinary file so that they can be used by a user. On the other hand, the dependent contents are managed as a concealed file so that they do not accept an operation instruction by a user.

At this time, if the dependent contents of the MPEG 4 are moved to an SD card, the dependent contents of the MPEG 4 are deleted from the contents list of the master equipment. Then, the contents of the MPEG 2 are changed to the dependent contents and are managed as the concealed file by the contents list. Thereby, they do not accept an operation instruction by the user. In addition, if the main contents of the MPEG 2 are moved to a DVD, the main contents of the MPEG 2 are deleted from the contents list of the master equipment. Then, the remaining dependent contents of the MPEG 4 are managed as the concealed file by the contents list. Thereby, they do not accept an operation instruction by the user. Herein, the number of the sets of dependent contents is not limited especially to the above described example. A plurality of sets of dependent contents may also be created for a single set of main contents.

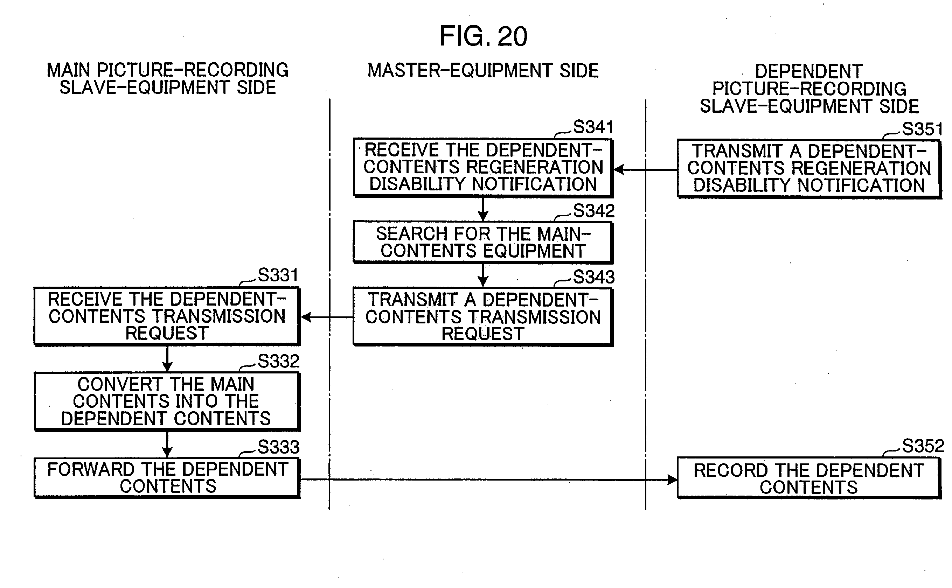

Fig. 20 is a flow chart, showing a contents restoration processing for, if dependent contents cannot be regenerated, restoring the dependent contents using main contents in the equipment management system shown in Fig. 1. Herein, the processing of restoring main contents using dependent contents is almost the same as the following.

As shown in Fig. 20, first, in a step S351, if dependent contents cannot be regenerated, using the network adapter 25, the control section 20 of the dependent picture-recording slave equipment transmits, to the master equipment, a dependent-contents regeneration disability notification for notifying it that the dependent contents cannot be regenerated. At this time, in a step S341, the network adapter 25 of the master equipment receives the dependent-contents regeneration disability notification, and then, outputs it to the control section 20a. Then, in a step S342, the control section 20a refers resource information which is recorded in the slave-equipment resource-information recording section 43 and searches for equipment in which the main contents which correspond to the dependent contents are recorded, or the main picture-recording slave equipment. Next, in a step S343, using the network adapter 25, the control section 20a transmits, to the main picture-recording slave equipment, a dependent-contents transmission request to convert the main contents into the dependent contents and forward them to the dependent picture-recording slave equipment.

Next, in a step S331, the network adapter 25 of the main picture-recording slave equipment receives the dependent-contents transmission request, and then, outputs it to the control section 20. Next, in a step S332, the control section 20 controls the regeneration section 18, and using the exchangeable record-medium recording section 15, regenerates the main contents and converts them into the dependent contents. Next, in a step S333, using the network adapter 25, the control section 20 forwards the dependent contents to the dependent picture-recording slave equipment. At this time, in a step S352, the network adapter 25 of the dependent picture-recording slave equipment receives the dependent contents, and then, outputs them to the recording section 13. Then, using the memory-card recording section 17, the recording section 13 records the dependent contents in a memory card. Hence, even if the dependent contents cannot be regenerated, the dependent contents can be created and restored using the main contents.

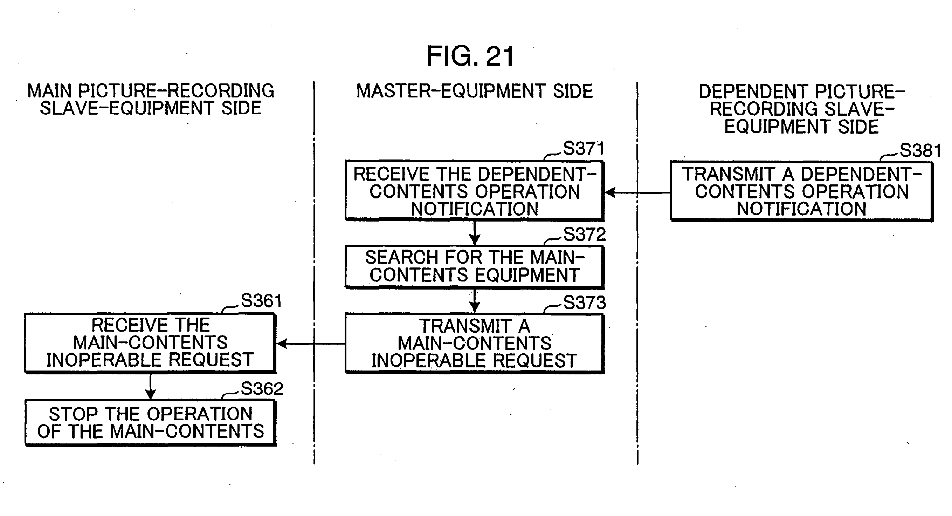

Fig. 21 is a flow chart, showing a contents-operation restriction processing for, if dependent contents accept an operation instruction by a user, refusing the operation instruction to main contents by the user in the equipment management system shown in Fig. 1. Herein, the processing of, if main contents accept an operation instruction by a user, refusing the operation instruction to dependent contents by the user, is almost the same as the following.

As shown in Fig. 21, if dependent contents accept an operation instruction by a user, in a step S381, using the network adapter 25, the control section 20 of the dependent picture-recording slave equipment transmits, to the master equipment, a dependent-contents operation notification for notifying it that the dependent contents accept an operation instruction by the user. At this time, in a step S371, the network adapter 25 of the master equipment receives the dependent-contents operation notification, and then, outputs it to the control section 20a. Then, in a step S372, the control section 20a refers resource information which is recorded in the slave-equipment resource-information recording section 43 and searches for equipment in which the main contents which correspond to the dependent contents are recorded, or the main picture-recording slave equipment. Next, in a step S373, using the network adapter 25, the control section 20a transmits, to the main picture-recording slave equipment, a main-contents inoperable request to refuse the operation instruction to the main contents by the user.

Next, in a step S361, the network adapter 25 of the main picture-recording slave equipment receives the main-contents inoperable request, and then, outputs it to the control section 20. Next, in a step S362, the control section 20 controls the operation section 21 or the like so that the operation instruction to the main contents by the user is refused. In this way, the main contents cannot be operated when the dependent contents are operated by the user. This allows the user to see contents as if only a single set of contents is recorded.

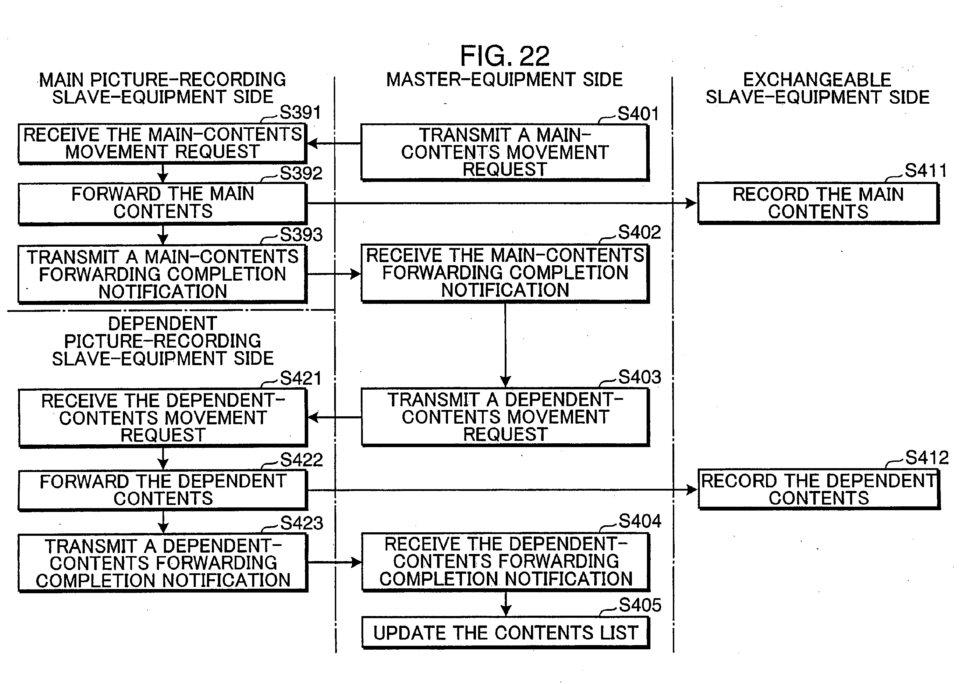

Fig. 22 is a flow chart, showing a contents united-movement processing for moving dependent contents together with main contents when the main contents are moved to an exchangeable record medium in the equipment management system shown in Fig. 1. Herein, the processing of moving main contents together with dependent contents when the dependent contents are moved to an exchangeable record medium is almost the same as the following.

As shown in Fig. 22, first, a user gives an instruction to move main contents, using the operation section 21 of the master equipment (e.g., the exchangeable record-medium regeneration unit 7 and the monitor 8). Then, in a step S401, the operation section 21 of the master equipment accepts the contents movement instruction, and outputs it to the control section 20a. Then, using the network adapter 25, the control section 20a transmits, to the main picture-recording slave equipment (e.g., the exchangeable record-medium recording unit 3 and the monitor 4), a main-contents movement request to move the main contents to slave equipment in which an exchangeable record medium is mounted, or exchangeable slave equipment. Herein, for example, if equipment which is equal to the exchangeable record-medium recording unit 3 and the monitor 4 is further connected to the equipment management system shown in Fig. 1, such equipment is equivalent to the exchangeable slave equipment.

Next, in a step S391, the network adapter 25 of the main picture-recording slave equipment receives the main-contents movement request, and then, outputs it to the control section 20. Next, in a step S392, the control section 20 controls the regeneration section 18, and using the exchangeable record-medium recording section 15, regenerates the main contents. Then, using the network adapter 25, it forwards the main contents to the exchangeable slave equipment. At this time, in a step S411, the network adapter 25 of the exchangeable slave equipment receives the main contents, and then, outputs them to the recording section 13. Then, using the exchangeable record-medium recording section 15, the recording section 13 records the main contents in an exchangeable record medium. After the forwarding of the main contents is completed, in a step S393, using the network adapter 25, the control section 20 transmits, to the master equipment,a main-contentsforwarding completion notification for notifying it that the forwarding of the main contents is completed.

Next, in a step S402, the network adapter 25 of the master equipment receives the main-contents forwarding completion notification, and then, outputs it to the control section 20a. Next, in a step S403, using the network adapter 25, the control section 20a transmits, to the dependent picture-recording slave equipment (e.g., the exchangeable record-medium recording unit 5 and the monitor 6), a dependent-contents movement request to move the dependent contents to the exchangeable slave equipment.

Next, in a step S421, the network adapter 25 of the dependent picture-recording slave equipment receives the dependent-contents movement request, and then, outputs it to the control section 20. Next, in a step S422, the control section 20 controls the regeneration section 18, and using the memory-card recording section 17, regenerates the dependent contents. Then, using the network adapter 25, it forwards the dependent contents to the exchangeable slave equipment. At this time, in a step S412, the network adapter 25 of the exchangeable slave equipment receives the dependent contents, and then, outputs them to the recording section 13. Then, using the exchangeable record-medium recording section 15, the recording section 13 records the dependent contents in the exchangeable record medium. After the forwarding of the dependent contents is completed, in a step S423, using the network adapter 25, the control section 20 transmits, to the master equipment, a dependent-contents forwarding completion notification for notifying it that the forwarding of the dependent contents is completed.

Next, in a step S404, the network adapter 25 of the master equipment receives the dependent-contents forwarding completion notification, and then, outputs it to the control section 20a. Next, in a step S405, the control section 20a record, in the slave-equipment resource-information recording section 43, the fact that the main contents and the dependent contents have been moved to the exchangeable record medium of the exchangeable slave equipment. Thereby, the contents list is updated. In this way, even if the main contents are moved to the exchangeable record medium, the main contents and the dependent contents are moved. This allows the user to see the contents as if only a single set of contents is recorded.

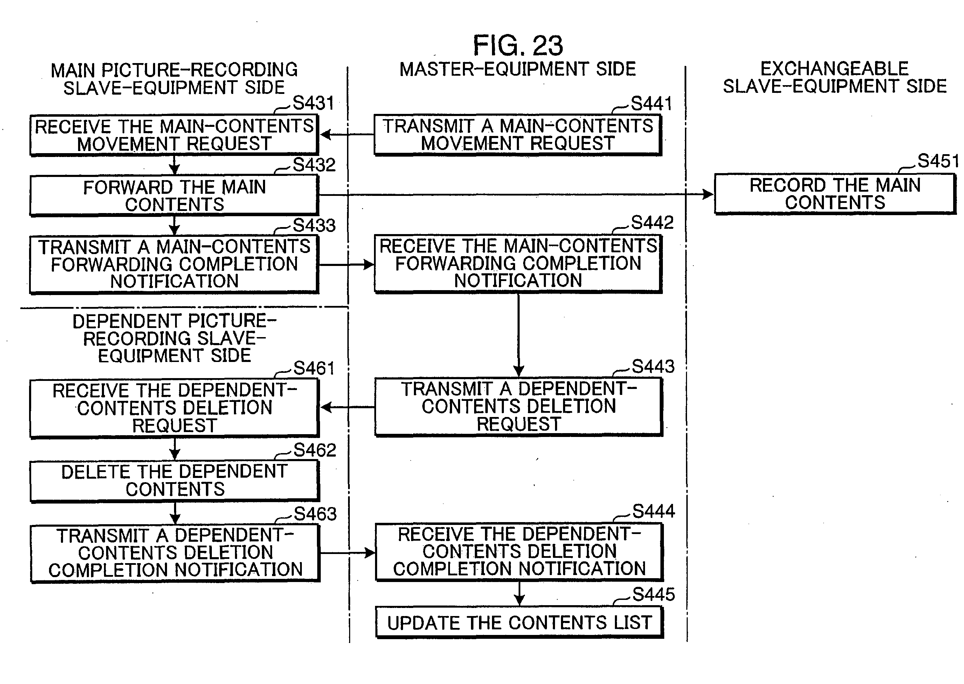

Fig. 23 is a flow chart, showing a contents deletion processing for deleting dependent contents if main contents are moved to an exchangeable record medium in the equipment management system shown in Fig. 1. Herein, the processing of deleting main contents if dependent contents are moved to an exchangeable record medium is almost the same as the following.

The processing of steps S431 to S433, S441 and S442, and S451 shown in Fig. 23, is executed in the same way as the processing of the steps S391 to S393, S401 and S402, and S411 shown in Fig. 22. After this processing has been executed, in a step S443, using the network adapter 25, the control section 20a transmits a dependent-contents deletion request to delete dependent contents to the dependent picture-recording slave equipment (e.g., the exchangeable record-medium recording unit 5 and the monitor 6).

Next, in a step S461, the network adapter 25 of the dependent picture-recording slave equipment receives the dependent-contents deletion request, and then, outputs it to the control section 20. Next, in a step S462, the control section 20 controls the recording section 13, and using the memory-card recording section 17, deletes the dependent contents. After the deletion of the dependent contents is completed, in a step S463, using the network adapter 25, the control section 20 transmits, to the master equipment, a dependent-contents deletion completion notification for notifying it that the deletion of the dependent contents is completed.

Next, in a step S444, the network adapter 25 of the master equipment receives the dependent-contents deletion completion notification, and then, outputs it to the control section 20a. Next, in a step S445, the control section 20a updates the contents list which manages the main contents and the dependent contents. Thereby, it reflects the result which has been produced in the processing of deleting the dependent contents. In this way, even if the main contents are moved to the exchangeable record medium, the dependent contents are deleted. This prevents the main contents and the dependent contents from being separately used.

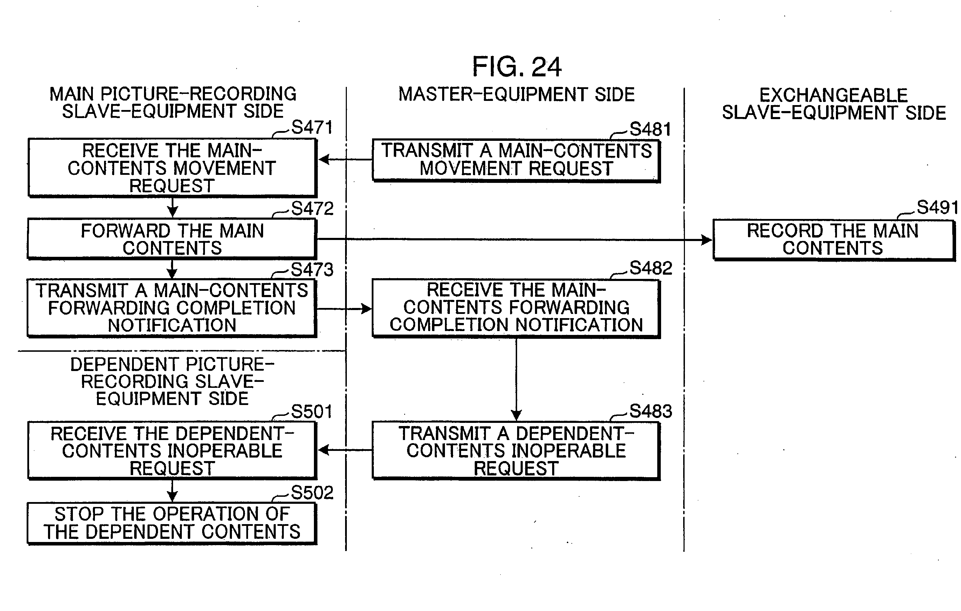

Fig. 24 is a flow chart, showing a contents-operation restriction processing for refusing an operation to dependent contents by a user when main contents are moved to an exchangeable record medium in the equipment management system shown in Fig. 1. Herein, the processing of refusing an operation to main contents by a user when dependent contents are moved to an exchangeable record medium is almost the same as the following.

The processing of steps S471 to S473, S481 and S482, and S491 shown in Fig. 24, is executed in the same way as the processing of the steps S391 to S393, S401 and S402, and S411 shown in Fig. 22. After this processing has been executed, in a step S483, the control section 20a updates the contents list so that an operation to dependent contents by a user is refused. Then, using the network adapter 25, it transmits a dependent-contents inoperable request to refuse the operation to the dependent contents by the user to the dependent picture-recording slave equipment (e.g., the exchangeable record-medium recording unit 5 and the monitor 6). At this time, the dependent contents may also be changed into a concealed file so that the dependent contents cannot be seen on the contents list which is clearly shown to a user.

Next, in a step S501, the network adapter 25 of the dependent picture-recording slave equipment receives the dependent-contents inoperable request, and then, outputs it to the control section 20. Next, in a step S502, the control section 20 controls the operation section 21 or the like so that the operation instruction to the dependent contents by the user is refused. In this way, if the main contents are moved to an exchangeable record medium, the contents list is updated in the master equipment so that the corresponding dependent contents cannot be operated. Thereby, an operation to the dependent contents by the user cannot be accepted. This allows the user to see the contents as if only a single set of contents is recorded.

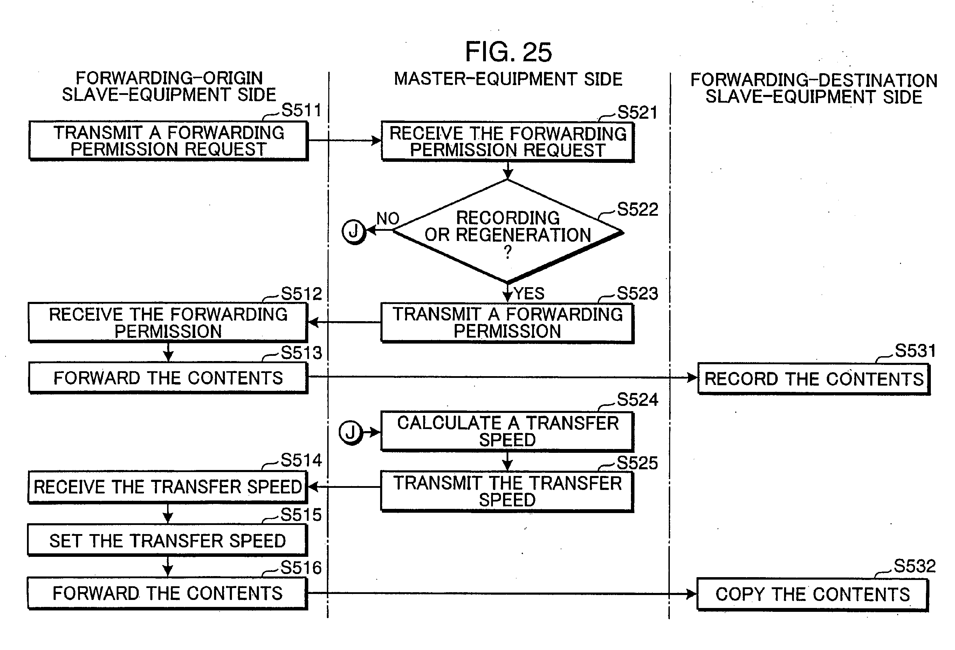

Fig. 25 is a flow chart, showing a contents-transmission restriction processing for transmitting a regeneration stream which is transmitted for recording or regeneration prior to another stream in the equipment management system shown in Fig. 1. Herein, the regeneration is equivalent to the display of video data, the output of audio data, or the like. It means a state in which contents should be offered to a user in real time.

As shown in Fig. 25, first, a user gives an instruction to move contents, using the operation section 21 of forwarding-origin slave equipment (e.g., the exchangeable record-medium recording unit 3 and the monitor 4). Then, in a step S511, using the network adapter 25, the control section 20 of the forwarding-origin slave equipment transmits, to the master equipment (e.g., the exchangeable record-medium regeneration unit 7 and the monitor 8), a forwarding permission request to ask for permission to forward the contents, as well as the purpose of forwarding such as recording, regeneration and copying.

Next, in a step S521, the network adapter 25 of the master equipment receives the forwarding purpose and the forwarding permission request, and then, outputs them to the control section 20. Next, in a step S522, the control section 20 decides whether or not the forwarding purpose is recording or regeneration. If it is recording or regeneration, the processing shifts to a step S523, otherwise, the processing shifts to a step S524.

If the forwarding purpose is recording or regeneration, in the step S523, using the network adapter 25, the control section 20a transmits a forwarding permission to the forwarding-origin slave equipment. Next, in a step S512, the network adapter 25 of the forwarding-origin slave equipment receives the forwarding permission, and then, outputs it to the control section 20. Next, in a step S513, the control section 20 controls the regeneration section 18, and using the exchangeable record-medium recording section 15, regenerates the contents in real time. Then, using the network adapter 25, it forwards the contents at an ordinary transfer speed to forwarding-destination slave equipment. At this time, in a step S531, the network adapter 25 of the forwarding-destination slave equipment receives the contents, and then, outputs them to the recording section 13. Then, using the exchangeable record-medium recording section 15, the recording section 13 certainly records the contents in an exchangeable record medium.

On the other hand, unless the forwarding purpose is recording or regeneration, for example, if it is copying, then the priority of the forwarding whose purpose is not recording or regeneration should be lowered when the in-house network 9 is used for recording or regeneration by another piece of slave equipment. Therefore, in the step S524, based on the quantity of traffic at present on the in-house network 9, the control section 20a calculates a transfer speed which is lower than the ordinary transfer speed. Then, using the network adapter 25, in a step S525, it transmits the transfer speed to the forwarding-origin slave equipment. Herein, there is a case where the in-house network 9 is not used for recording or regeneration by another piece of slave equipment, and thus, a band for forwarding is vacant. In that case, the control section 20a notifies it of a usable transfer speed so that the copying operation can be earlier completed.

Next, in a step S514, the network adapter 25 of the forwarding-origin slave equipment receives the transfer speed, and then, outputs it to the control section 20. Next, in a step S515, the control section 20 sets the transfer speed of the contents to the transfer speed it has received. Then, it controls the regeneration section 18, and using the exchangeable record-medium recording section 15, regenerates the contents in real time. In a step S516, using the network adapter 25, it forwards the contents at the set transfer speed to the forwarding-destination slave equipment. At this time, in a step S532, the network adapter 25 of the forwarding-destination slave equipment receives the contents, and then, outputs them to the recording section 13. Then, using the exchangeable record-medium recording section 15, the recording section 13 copies the contents in the exchangeable record medium.

In this way, the contents should be recorded or regenerated in real time, and a regeneration stream which is transmitted for it can be transmitted prior to another stream. Therefore, the traffic on the in-house network 9 can be effectively used, thereby recording or regenerating the contents stably.

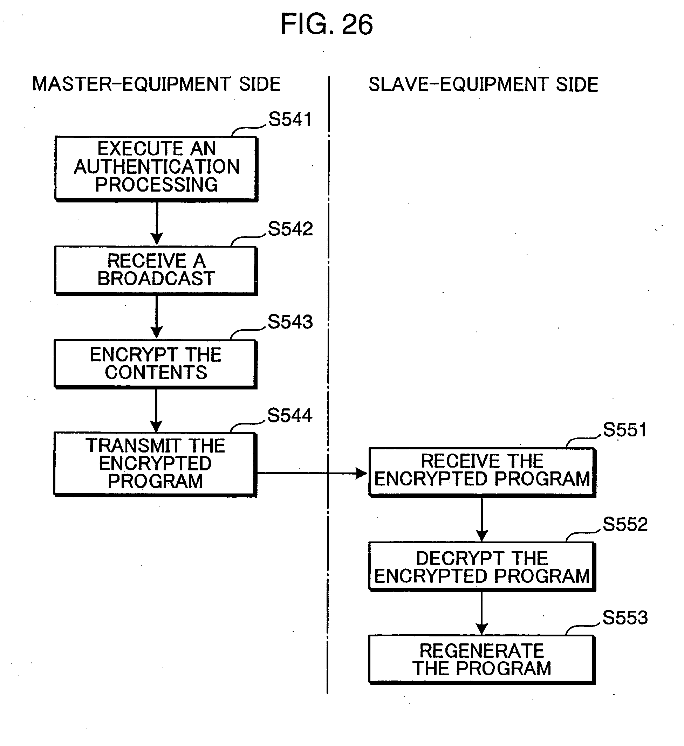

Fig. 26 is a flow chart, showing a master-equipment authentication processing for distributing contents to the slave equipment after the master equipment executes an authentication processing when a BS digital broadcast is received in the equipment management system shown in Fig. 1. As shown in Fig. 26, a B-CAS card is inserted in an authentication section 26 of the master equipment (e.g., the exchangeable record-medium recording unit 3 and the monitor 4). In this case, in a step S541, the authentication section 26 of the master equipment executes an authentication processing for obtaining permission to watch and listen to the contents. Then, in a step S542, the decoder 12 decodes a program which is received from the tuner 11, and then, outputs it to the recording section 13. Next, in a step S543, the control section 20 allows the recording section 13 to output the decoded program to the encrypting section 34. Then, it allows the encrypting section 34 to encrypt the program. Next, in a step S544, using the network adapter 25, the control section 20 of the master equipment transmits the encrypted program to the slave equipment (e.g., the exchangeable record-medium recording unit 5 and the monitor 6).

Next, in a step S551, the network adapter 25 of the slave equipment receives the encrypted program. Then, in a step S552, the control section 20 controls the decrypting section 33 so that it decrypts the encrypted program, and then, outputs it to the regeneration section 18. Next, in a step S553, the control section 20 controls the regeneration section 18 so that it regenerates the program. Then, the output section 19 displays the program in the monitor 6. In this way, using the authentication processing in the master equipment, the contents can be distributed to the slave equipment. This makes the authentication processing simpler and easier when several pieces of equipment are used in a house.

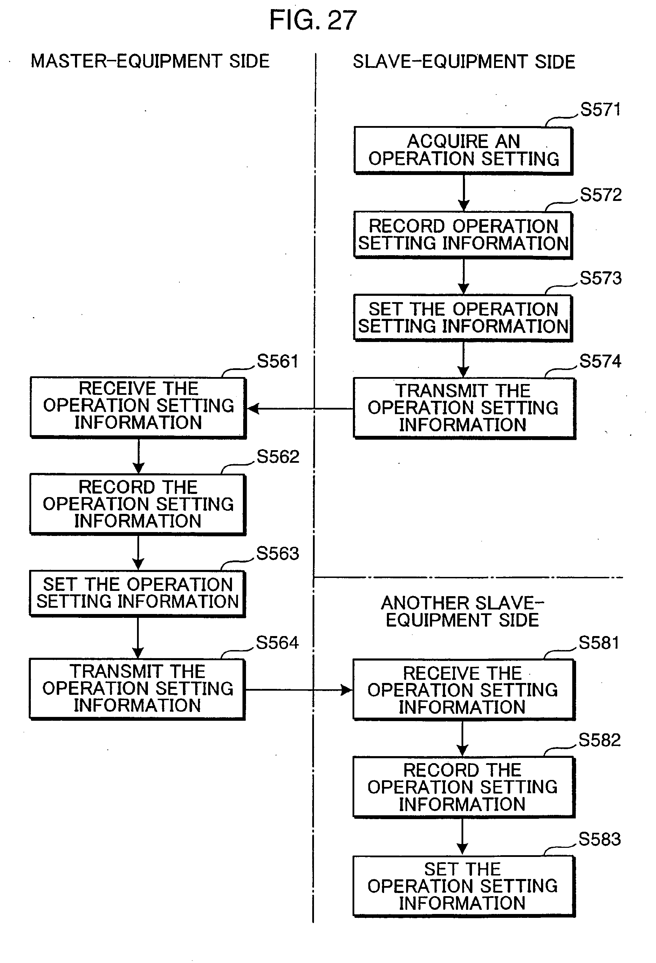

Fig. 27 is a flow chart, showing an operation-setting sharing processing for sharing the setting of an operation among pieces of equipment in the equipment management system shown in Fig. 1. As shown in Fig. 27, using the operation section 21, a user sets an operation of slave equipment (e.g., the exchangeable record-medium recording unit 5 and the monitor 6), for example, its receiving channel. Then, in a step S571, the operation section 21 acquires the operation setting, and outputs it to the control section 20. Next, in a step S572, the control section 20 records the acquired operation setting as operation setting information in the self-resource information recording section 42. Then, in a step S573, it sets the operation setting information in the operation section 21 or the like. Next, in a step S574, using the network adapter 25, the control section 20 transmits the operation setting information, together with the equipment identification information, to the master equipment (e.g., the exchangeable record-medium recording unit 3 and the monitor 4).

Next, in a step S561, the network adapter 25 of the master equipment receives the equipment identification information and the operation setting information, and outputs them to the control section 20. Then, in a step S562, the control section 20a records the received operation setting information in the self-resource information recording section 42 and the slave-equipment resource-information recording section 43. In a step S563, it sets the operation setting information in its own operation section 21 or the like. Next, in a step S564, using the network adapter 25, the control section 20 transmits the operation setting information to another piece of slave equipment. Herein, for example, if equipment which is equal to the exchangeable record-medium recording unit 3 and the monitor 4 is further connected to the equipment management system shown in Fig. 1, such equipment is equivalent to another such piece of slave equipment.

Next, in a step S581, the network adapter 25 of another such piece of slave equipment receives the operation setting information, and outputs it to the control section 20. Then, in a step S582, the control section 20 records the acquired operation setting as the operation setting information in the self-resource information recording section 42. In a step S583, it sets the operation setting information, for example, in the operation section 21. Hence, the setting of an operation which has been set in a piece of slave equipment can be used in another piece of equipment. This makes it possible to unify a user interface.

As described above, the equipment management system according to the present invention which manages resource information on equipment that relates to at least either of the regeneration and recording of contents which include at least either of video data and audio data, comprising, a plurality of pieces of equipment which are connected via a predetermined network so as to communicate with each other, one of the plurality of pieces of equipment being master equipment which manages resource information on the plurality of pieces of equipment, and the rest of the plurality of pieces of equipment being slave equipment which is controlled by the master equipment, the slave equipment including: a resource recording means for recording resource information on the slave equipment itself; and a communicating means for transmitting, to the master equipment, the resource information on the slave equipment itself which is recorded in the resource recording means, the master equipment including: a communicating means for receiving the resource information which is transmitted by the communicating means of the slave equipment; a resource recording means for recording, in each piece of equipment, resource information on the master equipment itself and the resource information on the slave equipment which is received by the communicating means; and a managing means for managing the resource information on each piece of equipment which is recorded in the resource recording means.

In the equipment management system according to the present invention, the resource information on the slave equipment itself which is recorded in the slave equipment is transmitted to the master equipment. Then, the transmitted resource information is received in the master equipment. Next, the received resource information on the slave equipment is recorded in each piece of equipment. Sequentially, the recorded resource information on each piece of equipment is intensively managed. Therefore, using the resource information on each piece of equipment, the master equipment can control the operation of the slave equipment. Thus, resource information on equipment that relates to at least either of the regeneration and recording of contents can be intensively managed, and thereby, a plurality of pieces of equipment can operate cooperatively and efficiently.

It is preferable that: if the slave equipment operates as the master equipment, the communicating means of the slave equipment receive resource information which is transmitted by the communicating means of another piece of equipment which becomes the slave equipment; if the slave equipment operates as the master equipment, the resource recording means of the slave equipment record, in each piece of equipment, resource information on the slave equipment itself and the resource information on the slave equipment which is received by the communicating means; the slave equipment further include a managing means for managing the resource information on each piece of equipment which is recorded in the resource recording means if the slave equipment operates as the master equipment; if the master equipment operates as the slave equipment, the communicating means of the master equipment transmit the resource information on each piece of equipment which is recorded in the resource recording means to another piece of equipment which becomes the master equipment; the master equipment operate as the slave equipment after the communicating means transmits the resource information on each piece of equipment which is recorded in the resource recording means to one of the pieces of slave equipment; and the one of the pieces of slave equipment operate as the master equipment after the communicating means receives the resource information on each piece of equipment which is transmitted by the communicating means of the master equipment and records the resource information in the resource recording means.

In this case, the master equipment and the slave equipment have a common configuration, and thus, the master equipment can be used as the slave equipment, and vice versa. Thus, you can build the equipment management system if you install equipment additionally. This facilitates the establishment of such an equipment management system in a house.

Preferably: each of the plurality of pieces of equipment should further include a power-source switching means for switching from a first power-source state to a second power-source state in which electric power is consumed less than that in the first power-source state; and the managing means of the master equipment should control the power-source switching means of the slave equipment which is used among the pieces of slave equipment, so that the slave equipment is set to the first power-source state.

In this case, the master equipment can control the power-source state of the slave equipment, thereby reducing the power consumption unnecessary to the slave equipment.

It is preferable that: the communicating means of the master equipment transmit a starting confirmation notification for inquiring of the slave equipment which stays in the second power-source state whether it can start; the communicating means of the slave equipment receive the starting confirmation notification, and if the slave equipment can start, transmits a starting enable notification for notifying the master equipment that it can start; and if the communicating means receives the starting enable notification, the managing means of the master equipment decide that the slave equipment can start, and set the slave equipment to the first power-source state.

In this case, the master equipment can certainly control the power-source state of the slave equipment, thereby reducing the power consumption unnecessary to the slave equipment.

Preferably: unless the communicating means receives the starting enable notification when a predetermined time elapses after it transmits the starting confirmation notification, the managing means of the master equipment should decide that the slave equipment which does not transmit the starting enable notification cannot start; and the resource recording means of the master equipment should delete the resource information on the slave equipment which is decided not to be able to start by the managing means.

In this case, an operation can be suppressed which is not required for the slave equipment which cannot start.

It is preferable that the managing means of the master equipment control the power-source switching means of the slave equipment which is not used among the pieces of slave equipment, so that the slave equipment is set to the second power-source state.

In this case, the master equipment can set, to a low power-consumption state, the power-source state of the slave equipment which is not used at a certain time. This reduces the power consumption unnecessary to the slave equipment.

Preferably: the resource recording means of each of the plurality of pieces of equipment should record, as the resource information, equipment identification information for identifying the equipment itself and equipment resource information for specifying a function which can be used by a user; the communicating means of the slave equipment should transmit, to the master equipment, the equipment identification information on the slave equipment itself and the equipment resource information which are recorded in the resource recording means; the communicating means of the master equipment should receive the equipment identification information and the equipment resource information which are transmitted by the communicating means of the slave equipment; and the resource recording means of the master equipment should record the equipment resource information which is received by the communicating means, so that it corresponds to the equipment identification information.

In this case, the equipment resource information for specifying a function which can be used by a user can be intensively and efficiently managed.

It is preferable that unless the equipment identification information which is received by the communicating means is recorded, the resource recording means of the master equipment additionally record the equipment identification information and the equipment resource information which are received by the communicating means.

In this case, even if equipment is newly added, the equipment resource information on all the pieces of equipment can be intensively and efficiently managed.

Preferably: at least one of the pieces of slave equipment should further include an equipment-resource deletion accepting means for accepting, from a user, an equipment-resource deletion instruction which has the equipment identification information on the slave equipment itself; the communicating means of the slave equipment which is provided with the equipment-resource deletion accepting means should transmit, to the master equipment, the equipment-resource deletion instruction which is accepted by the equipment-resource deletion accepting means; the communicating means of the master equipment should receive the equipment-resource deletion instruction which is transmitted by the communicating means of the slave equipment; and if the communicating means accepts the equipment-resource deletion instruction, the managing means of the master equipment should refer to the equipment identification information which is recorded in the resource recording means, and should delete the equipment resource information which corresponds to the equipment identification information that is included in the equipment-resource deletion instruction.

In this case, the unnecessary equipment resource information can be deleted according to instructions which are given by the slave equipment.

It is preferable that: the slave equipment which is provided with the equipment-resource deletion accepting means include a contents recording unit which has a contents recording means for recording contents; the resource recording means of the contents recording unit further record, as the resource information, contents identification information for specifying the contents which are recorded in the contents recording means; the communicating means of the contents recording unit also transmit, to the master equipment, the contents identification information which is recorded in the resource recording means; the communicating means of the master equipment also receive the contents identification information which is transmitted by the communicating means of the slave equipment; the resource recording means of the master equipment also record the contents identification information which is received by the communicating means, so that it corresponds to the equipment identification information; and if the communicating means accepts the equipment-resource deletion instruction, the managing means of the master equipment refer to the equipment identification information which is recorded in the resource recording means, and delete all the contents identification information which corresponds to the equipment identification information that is included in the equipment-resource deletion instruction.

In this case, the contents identification information can also be automatically deleted which is accompanied to the equipment resource information that is deleted in response to instructions which are given by the slave equipment.

Preferably: the slave equipment should further include a connecting means for making its connection state to the network intermittent; and the communicating means of the slave equipment should transmit the resource information which is recorded in the resource recording means before the connecting means cuts off the connection to the network.

In this case, the resource information on the slave equipment can certainly be transmitted to the master equipment, thereby surely managing the resource information on the slave equipment.

It is preferable that: the slave equipment further include a power-source switching means for switching from a first power-source state to a second power-source state in which electric power is consumed less than that in the first power-source state; and the communicating means of the slave equipment transmit, to the master equipment, the resource information which is recorded in the resource recording means, before the power-source switching means switches from the first power-source state to the second power-source state.

In this case, even if the slave equipment is switched from the ordinary power-source state to the sleep state, the resource information on the slave equipment can certainly be transmitted to the master equipment. This surely manages the resource information on the slave equipment.

Preferably: at least two of the plurality of pieces of equipment should each include an exchangeable record-medium drive unit which executes at least either of the regeneration and the recording of an exchangeable record medium; among the exchangeable record-medium drive units, the resource recording means of at least one piece of equipment should record, as the resource information, exchangeable record-medium identification information for identifying the exchangeable record medium which is used, and usage condition information which includes at least either of the regeneration condition and the recording condition of the exchangeable record medium; the communicating means of the slave equipment where the exchangeable record-medium identification information and the usage condition information are recorded in the resource recording means should transmit, to the master equipment, the exchangeable record-medium identification information and the usage condition information which are recorded in the resource recording means; the communicating means of the master equipment should receive the exchangeable record-medium identification information and the usage condition information which are transmitted by the communicating means of the exchangeable record-medium drive unit; the resource recording means of the master equipment should record the usage condition information which is received by the communicating means, so that it corresponds to the exchangeable record-medium identification information; and the managing means of the master equipment should manage the usage condition information on each exchangeable record medium which is recorded in the resource recording means.

In this case, the usage condition of an exchangeable record medium which has been learned in a piece of exchangeable record-medium drive unit can be used in another piece of exchangeable record-medium drive unit. This helps shorten the time during which the usage condition is learned, or the like.

It is preferable that: at least two of the plurality of pieces of equipment each further include an operating means for accepting an operation command in response to an operation by a user; the resource recording means of one of the pieces of equipment which are provided with the operating means record, as the resource information, the equipment identification information for identifying the equipment itself, and operation setting information for specifying an operation setting which is set by the user for the operating means; the communicating means of the slave equipment where the equipment identification information and the operation setting information are recorded in the resource recording means transmit, to the master equipment, the equipment identification information and the operation setting information which are recorded in the resource recording means; the communicating means of the master equipment receive the equipment identification information and the operation setting information which are transmitted by the communicating means of the slave equipment; the resource recording means of the master equipment record the operation setting information which is received by the communicating means, so that it corresponds to the equipment identification information; and using the operation setting information on the single slave equipment which is recorded in the resource recording means, the managing means of the master equipment execute an operation setting of the operating means of another piece of equipment.

In this case, the operation setting which is set in a piece of equipment that includes the operating means can be used by another piece of equipment that includes the operating means. This makes it possible to unify a user interface.

Preferably: the operating means should accept the setting of a receiving channel in response to an operation by a user; the resource recording means of one of the pieces of equipment which are provided with the operating means should record, as the operation setting information, channel setting information for specifying the setting of the receiving channel which is set by the user; the communicating means of the slave equipment where the channel setting information is recorded in the resource recording means should transmit the equipment identification information and the channel setting information which are recorded in the resource recording means; the communicating means of the master equipment should receive the equipment identification information and the channel setting information which are transmitted by the communicating means of the slave equipment; the resource recording means of the master equipment should record the channel setting information which is received by the communicating means, so that it corresponds to the equipment identification information; and using the channel setting information on the single slave equipment which is recorded in the resource recording means, the managing means of the master equipment should execute a channel setting of the operating means of another piece of equipment.

In this case, the channel setting which is set in a piece of equipment that includes the operating means can be used by another piece of equipment that includes the operating means. This makes it possible to unify a channel operation which is executed by a user.

It is preferable that: at least one of the pieces of slave equipment include a contents recording unit which has a contents recording means for recording contents; the resource recording means of the contents recording unit record, as the resource information, the equipment identification information for identifying the equipment itself and contents identification information for specifying the contents which are recorded in the contents recording means; the communicating means of the slave equipment where the equipment identification information and the contents identification information are recorded in the resource recording means transmit, to the master equipment, the equipment identification information and the contents identification information which are recorded in the resource recording means; the communicating means of the master equipment receive the equipment identification information and the contents identification information which are transmitted by the communicating means of the slave equipment; and the resource recording means of the master equipment record the contents identification information which is received by the communicating means, so that it corresponds to the equipment identification information.

In this case, the contents identification information for specifying recorded contents can be intensively and efficiently managed.

Preferably, unless the contents identification information which is received by the communicating means is recorded, the resource recording means of the master equipment should record the contents identification information which is received by the communicating mean, so that it corresponds to the equipment resource information which is received by the communicating means.

In this case, even if equipment is newly added, the contents identification information on all the pieces of equipment can be intensively and efficiently managed.

It is preferable that: the contents recording unit further have a generating means for referring to electronic program information which includes a receiving channel, program contents and program time for each program, and generating contents identification information on the contents which are recorded in the contents recording means; and the resource recording means of the contents recording unit record, as the resource information, the equipment identification information for identifying the equipment itself and the contents identification information which is generated by the generating means.

In this case, contents identification information can be automatically generated, using the electronic program information.

Preferably: one of the pieces of slave equipment should further include a deletion accepting means for accepting, from a user, a contents deletion instruction which has the equipment identification information on the slave equipment itself and the contents identification information which should be deleted; the communicating means of the slave equipment which is provided with the deletion accepting means should transmit, to the master equipment, the contents deletion instruction which is accepted by the deletion accepting means; the communicating means of the master equipment should receive the contents deletion instruction which is transmitted by the communicating means of the slave equipment; and if the communicating means accepts the contents deletion instruction, the managing means of the master equipment should refer to the equipment identification information and the contents identification information which are recorded in the resource recording means, and should delete the contents identification information which is included in the contents deletion instruction among the pieces of contents identification information which corresponds to the equipment identification information that is included in the contents deletion instruction.

In this case, even if contents identification information is deleted in response to an operation which is executed by a user, the contents identification information on all the pieces of equipment can be intensively and efficiently managed.

It is preferable that: if contents which are recorded in the contents recording means are deleted, the communicating means of the contents recording unit transmit, to the master equipment, a contents deletion instruction which includes the contents identification information on the deleted contents and the equipment identification information on the slave equipment itself; the communicating means of the master equipment receive the contents deletion instruction which is transmitted by the communicating means of the contents recording unit; and if the communicating means accepts the contents deletion instruction, the managing means of the master equipment refer to the equipment identification information and the contents identification information which are recorded in the resource recording means, and delete the contents identification information which is included in the contents deletion instruction among the pieces of contents identification information which corresponds to the equipment identification information that is included in the contents deletion instruction.

In this case, even if the contents of the slave equipment are automatically deleted, the contents identification information on all the pieces of equipment can be intensively and efficiently managed.

Preferably: the contents recording means should include an exchangeable record-medium recording means which records contents in an exchangeable record medium and obtains exchangeable record-medium identification information for identifying the exchangeable record medium; the resource recording means of the contents recording unit should also record, as the contents identification information, the exchangeable record-medium identification information which is obtained by the exchangeable record-medium recording means; the communicating means of the slave equipment where the exchangeable record-medium identification information is recorded in the resource recording means should transmit, to the master equipment, the equipment identification information and the contents identification information including the exchangeable record-medium identification information which are recorded in the resource recording means; the communicating means of the master equipment should receive the equipment identification information and the contents identification information including the exchangeable record-medium identification information which are transmitted by the communicating means of the slave equipment; and the resource recording means of the master equipment should record the contents identification information including the exchangeable record-medium identification information which is received by the communicating means, so that it corresponds to the equipment identification information.

In this case, the exchangeable record-medium identification information for identifying an exchangeable record medium is arranged for each equipment. This makes it possible to manage such information intensively and efficiently.

It is preferable that: the resource recording means of the contents recording unit further record, as the contents identification information, copyright management information on the copyright of contents; the resource recording means of the master equipment record the contents identification information including the copyright management information, so that it corresponds to the equipment identification information; and the managing means of the master equipment manage the copyright management information which is recorded in the resource recording means.

In this case, the copyright management information on the copyright of contents can be intensively and efficiently managed.

Preferably: the copyright management information should include movement restriction information which has at least one of the pieces of information on the number of times up to which contents are permitted to move, the period during which the contents are permitted to move and the time when the contents are permitted to move, for an exchangeable record medium; and the managing means of the master equipment should manage the movement restriction information which is recorded in the resource recording means.

In this case, the movement restriction information can be intensively and efficiently managed which has at least one of the pieces of information on the number of times up to which contents are permitted to move, the period during which the contents are permitted to move and the time when the contents are permitted to move.

It is preferable that: the copyright management information include copy restriction information which has at least one of the pieces of information on the number of times up to which contents are permitted to be copied, the number of generations for which the contents are permitted to be copied, the period during which the contents are permitted to be copied and the time when the contents are permitted to be copied; and the managing means of the master equipment manage the copy restriction information which is recorded in the resource recording means.

In this case, the copy restriction information can be intensively and efficiently managed which has at least one of the pieces of information on the number of times up to which contents are permitted to be copied, the number of generations for which the contents are permitted to be copied, the period during which the contents are permitted to be copied and the time when the contents are permitted to be copied.

Preferably, the copy restriction information includes at least one of copy impermissible information which does not permit contents to be copied, copy free information which permits the contents to be freely copied, one-generation copy permissible information which permits the contents to be copied only for one generation, and once-copy permissible information which permits the contents to be copied only once.

In this case, the copy restriction information is closely sorted out, and thus, it can be intensively and efficiently managed.

It is preferable that: the copyright management information include regeneration restriction information which has at least one of the pieces of information on the number of times up to which contents are permitted to be regenerated, the period during which the contents are permitted to be regenerated and the time when the contents are permitted to be regenerated; and the managing means of the master equipment manage the regeneration restriction information which is recorded in the resource recording means.

In this case, the regeneration restriction information can be intensively and efficiently managed which has at least one of the pieces of information on the number of times up to which contents are permitted to be regenerated, the period during which the contents are permitted to be regenerated and the time when the contents are permitted to be regenerated.

Preferably: one of the pieces of slave equipment should further include a reservation accepting means for accepting reservation setting information which is used to set a reserved picture-recording of a program which is recorded as contents; the communicating means of the slave equipment which is provided with the reservation accepting means should transmit, to the master equipment, the reservation setting information which is accepted by the reservation accepting means; the communicating means of the master equipment should receive the reservation setting information which is transmitted by the communicating means of the slave equipment; the managing means of the master equipment should refer to the reservation setting information which is transmitted by the communicating means and the resource information on each piece of equipment which is recorded in the resource recording means, and should search for the slave equipment which can record the picture of the reserved program; and the communicating means of the master equipment should transmit the reservation setting information to the slave equipment which is obtained by the search of the managing means.

In this case, a search is made of the plurality of pieces of equipment for the equipment which can make a picture recording of the reserved program. Then, the reservation setting information is transmitted. Therefore, from among the plurality of pieces of equipment, a reservation can be set automatically in the equipment suitable for the reserved picture recording.

It is preferable that: the master equipment further include a change detecting means for detecting a change in the broadcasting time of the program which is accepted by the reservation accepting means; if a change in the broadcasting time of the program is detected by the change detecting means, the managing means of the master equipment refer to the resource information on each piece of equipment which is recorded in the resource recording means, and search for another piece of slave equipment which can record a part of the program that cannot be recorded by the slave equipment which is to record the program before the change; and the communicating means of the master equipment transmit, to the another piece of slave equipment which is obtained by the search of the managing means, post-change reservation setting information for recording a part of the program that cannot be recorded by the slave equipment which is to record the program before the change.

In this case, even if the broadcasting time of a program is changed, the picture of a part of the program that cannot be recorded is automatically recorded in another piece of slave equipment. This makes it possible to certainly record the entire program.

Preferably: the slave equipment which is obtained by the search of the managing means of the master equipment should further include a picture-recording disability detecting means for, after the communicating means receives the reservation setting information from the communicating means of the master equipment, detecting that the picture of the program which is specified by the reservation setting information cannot be recorded; if the picture-recording disability detecting means detects that the picture of the program cannot be recorded, the communicating means of the slave equipment which is provided with the picture-recording disability detecting means should transmit, to the master equipment, a picture-recording disability notification for notifying it that the picture of the program cannot be recorded; the communicating means of the master equipment should receive the picture-recording disability notification which is transmitted by the communicating means of the slave equipment; if the communicating means receives the picture-recording disability notification, the managing means of the master equipment should refer to the resource information on each piece of equipment which is recorded in the resource recording means, and should search for another piece of slave equipment which can record the whole or a part of the program that cannot be recorded by the slave equipment which transmits the picture-recording disability notification; and the communicating means of the master equipment should transmit, to the another piece of slave equipment, picture-recording setting information for recording the whole or a part of the program that cannot be recorded by the slave equipment which transmits the picture-recording disability notification.

In this case, even if the equipment which has accepted the setting of a reservation cannot make a picture recording, the picture of the whole or a part of the program that cannot be recorded is automatically recorded in another piece of slave equipment. This makes it possible to certainly record the entire program.

It is preferable that: the slave equipment which transmits the picture-recording disability notification and the another piece of slave equipment further include a commercial-message detecting means for detecting a commercial message during a program whose picture is recorded; the slave equipment which transmits the picture-recording disability notification stop recording the program during the commercial message which is detected by the commercial-message detecting means; and the another piece of slave equipment start to record the program during the commercial message which is detected by the commercial-message detecting means.

In this case, the seam in a recorded program is set during its commercial message, thereby regenerating the recorded program in a seamless state.

Preferably, if a part of a program is recorded in one of the plurality of pieces of equipment and the rest of the program is recorded in another one of the plurality of pieces of equipment, the managing means of the master equipment should move, to either of the one piece of equipment and the another piece of equipment, the part of the program which is recorded in the other.

In this case, even if a program is divided and recorded, its parts can be automatically united and recorded.

It is preferable that: the plurality of pieces of equipment include first and second contents recording units which each have a contents recording means for recording contents; when contents are recorded, the managing means of the master equipment allow the first contents recording unit to record the contents as main contents and allow the second contents recording unit to record the contents as dependent contents; the contents identification information include main-contents identification information for specifying the main contents and dependent-contents identification information for specifying the dependent contents; and using the main-contents identification information and the dependent-contents identification information, the resource recording means of the master equipment record the contents identification information so that it corresponds to equipment identification information, in a state where the contents can be identified as the main contents or the dependent contents.

In this case, the sets of contents which have one and the same set of contents can be recorded as the main contents and the dependent contents, thus making it possible to use either of them as a backup for the other.

Preferably, the managing means of the master equipment should record the main contents in a first recording format and should record the dependent contents in a second recording format which is different from the first recording format.

In this case, the sets of contents which have one and the same set of contents can be recorded in a recording format different from each other. This makes it possible to use various record mediums suitable for each recording format.

It is preferable that if the main contents cannot be regenerated, the managing means of the master equipment record again main contents which are created out of the dependent contents, and if the dependent contents cannot be regenerated, the managing means of the master equipment record again dependent contents which are created out of the main contents.

In this case, even if either of the main contents and the dependent contents cannot be regenerated, the one can be created and restored out of the other.

Preferably, if an operation instruction by a user is accepted to either of the main contents and the dependent contents, the managing means of the master equipment should control the plurality of pieces of equipment, so that they do not accept an operation instruction to the other by a user.

In this case, if either of the main contents and the dependent contents is operated by a user, the other cannot be operated. This allows the user to see the contents as if only a single set of contents is recorded.

It is preferable that: at least one of the plurality of pieces of equipment include an exchangeable record-medium recording unit which records contents in an exchangeable record medium; and when either of the main contents and the dependent contents is moved to the exchangeable record medium of the exchangeable record-medium recording unit, the managing means of the master equipment move the main contents and the dependent contents together.

In this case, even if either of the main contents and the dependent contents is moved to an exchangeable record medium, the main contents and the dependent contents are moved together. This allows a user to see the contents as if only a single set of contents is recorded.

Preferably: at least one of the plurality of pieces of equipment should include an exchangeable record-medium recording unit which records contents in an exchangeable record medium; and when either of the main contents and the dependent contents is moved to the exchangeable record medium of the exchangeable record-medium recording unit, the managing means of the master equipment should delete the other.

In this case, even if either of the main contents and the dependent contents is moved to an exchangeable record medium, the other is deleted. This prevents the main contents and the dependent contents from being separately used.

It is preferable that: at least one of the plurality of pieces of equipment include an exchangeable record-medium recording unit which records contents in an exchangeable record medium; and when either of the main contents and the dependent contents is moved to the exchangeable record medium of the exchangeable record-medium recording unit, the managing means of the master equipment control the plurality of pieces of equipment, so that they do not accept an operation instruction to the other by a user.

In this case, even if either of the main contents and the dependent contents is moved to an exchangeable record medium, an operation to the other by a user is not accepted. This allows the user to see the contents as if only a single set of contents is recorded.

Preferably: at least one of the plurality of pieces of equipment should include a contents regeneration unit which has a contents regenerating means for regenerating contents and outputting a regeneration stream; and if equipment which receives a regeneration stream that is outputted via the network from the contents regeneration unit records or presents the contents in which the regeneration stream is used, the managing means of the master equipment should control another piece of equipment, so that the network is used within a range where the transmission speed of the regeneration stream which is outputted from the contents regeneration unit remains unchanged.

In this case, the contents need to be recorded or presented in real time, and the regeneration stream which is transmitted for such recording or presentation can be transmitted prior to another stream. Therefore, the traffic on the network can be effectively used, thereby recording or presenting the contents stably.

It is preferable that the communicating means be built in an adapter means which can be attached to and detached from the main body of equipment.

In this case, the adapter means is attached to the main body of equipment, and thus, each of the above described functions can be realized. In addition, there is no need for the adapter means in a stand-alone usage, thereby reducing the cost of the main body of equipment.

Preferably, the communicating means should further include: an encrypting means for encrypting contents when the contents are transmitted; and a decrypting means for decrypting encrypted contents.

In this case, the communication of contents between pieces of equipment is executed after they are encrypted. This can more certainly keep the contents secret.

It is preferable that: the master equipment further include an authenticating means for executing a contents watching-and-listening authentication processing for obtaining permission to watch and listen to contents, and a decode means for decoding the contents after the contents watching-and-listening authentication is completed by the authenticating means; the encrypting means of the master equipment encrypts the contents which are decoded by the decode means; the communicating means of the master equipment transmit the encrypted contents to the slave equipment; the communicating means of the slave equipment receive the encrypted contents which are transmitted from the communicating means of the master equipment; and the decrypting means of the slave equipment encrypts the encrypted contents which are received by the communicating means.

In this case, using the authentication processing in the master equipment, the contents can be distributed to the slave equipment. This makes the authentication processing simpler and easier when several pieces of equipment are used in a house.

The equipment management method according to the present invention in which resource information on equipment that relates to at least either of the regeneration and recording of contents which include at least either of video data and audio data is managed using one piece of master equipment and at least one piece of slave equipment which are connected via a predetermined network so as to communicate with each other, comprising the steps of: the slave equipment, transmitting, to the master equipment, resource information on the slave equipment itself which is recorded in a resource recording means of the slave equipment itself; the master equipment, receiving the resource information which is transmitted from the slave equipment; the master equipment, recording, in each piece of equipment, the resource information on the slave equipment which is received, in the resource recording means where resource information on the master equipment itself is recorded; and the master equipment, managing the resource information on each piece of equipment which is recorded in the resource recording means.

In the equipment management method according to the present invention, the resource information on the slave equipment itself which is recorded in the slave equipment is transmitted to the master equipment. Then, the transmitted resource information is received in the master equipment. Next, the received resource information on the slave equipment is recorded in each piece of equipment. Sequentially, the recorded resource information on each piece of equipment is intensively managed. Therefore, using the resource information on each piece of equipment, the master equipment can control the operation of the slave equipment. Thus, resource information on equipment that relates to at least either of the regeneration and recording of contents can be intensively managed, and thereby, a plurality of pieces of equipment can operate cooperatively and efficiently.

The equipment management unit according to the present invention, which operates as master equipment or slave equipment that is controlled by the master equipment which is connected via a predetermined network so as to communicate mutually with a plurality of pieces of equipment and manages resource information on equipment that relates to at least either of the regeneration and recording of contents which include at least either of video data and audio data, comprising: a resource recording means for, if the equipment management unit operates as the slave equipment, recording resource information on the slave equipment itself; and a communicating means for, if the equipment management unit operates as the slave equipment, transmitting, to the master equipment, the resource information on the slave equipment itself which is recorded in the resource recording means, wherein: if the equipment management unit operates as the master equipment, the communicating means receives the resource information which is transmitted by the communicating means of the slave equipment; if the equipment management unit operates as the master equipment, the resource recording means records, in each piece of equipment, the resource information on the slave equipment which is received by the communicating means; and if the equipment management unit operates as the master equipment, the equipment management unit further comprises a managing means for managing the resource information on each piece of equipment which is recorded in the resource recording means.

In the equipment management unit according to the present invention, the resource information on the slave equipment itself which is recorded in the slave equipment is transmitted to the master equipment. Then, the transmitted resource information is received in the master equipment. Next, the received resource information on the slave equipment is recorded in each piece of equipment. Sequentially, the recorded resource information on each piece of equipment is intensively managed. Therefore, using the resource information on each piece of equipment, the master equipment can control the operation of the slave equipment. Thus, resource information on equipment that relates to at least either of the regeneration and recording of contents can be intensively managed, and thereby, a plurality of pieces of equipment can operate cooperatively and efficiently. In addition, it works as the master equipment or the slave equipment, and thus, the master equipment can be used as the slave equipment, and vice versa. Thus, you can build the equipment management system if you install equipment additionally. This facilitates the establishment of such an equipment management system in a house.

Although the present invention has been fully described by way of example with reference to the accompanied drawings, it is to be understood that various changes and modifications will be apparent to those skilled in the art. Therefore, unless otherwise such changes and modifications depart from the scope of the present invention hereinafter defined, they should be construed as being included therein.

An equipment management system is provided in which: two exchangeable record-medium recording units and an exchangeable record-medium regeneration unit are connected via an in-house network, so that they can communicate with each other; and one of these pieces of equipment is master equipment which manages resource information on the pieces of equipment, and the other pieces of equipment are slave equipment which is controlled by the master equipment.

## Claims

1. An equipment management system which manages resource information on equipment that relates to at least either of the regeneration and recording of contents which include at least either of video data and audio data, comprising,
a plurality of pieces of equipment which are connected via a predetermined network so as to communicate with each other,
one of the plurality of pieces of equipment being master equipment which manages resource information on the plurality of pieces of equipment, and the rest of the plurality of pieces of equipment being slave equipment which is controlled by the master equipment,
the slave equipment including:
a resource recording means for recording resource information on the slave equipment itself; and
a communicating means for transmitting, to the master equipment, the resource information on the slave equipment itself which is recorded in the resource recording means,
the master equipment including:
a communicating means for receiving the resource information which is transmitted by the communicating means of the slave equipment;
a resource recording means for recording, in each piece of equipment, resource information on the master equipment itself and the resource information on the slave equipment which is received by the communicating means; and
a managing means for managing the resource information on each piece of equipment which is recorded in the resource recording means.

2. The equipment management system according to claim 1, wherein:
if the slave equipment operates as the master equipment, the communicating means of the slave equipment receives resource information which is transmitted by the communicating means of another piece of equipment which becomes the slave equipment;
if the slave equipment operates as the master equipment, the resource recording means of the slave equipment records, in each piece of equipment, resource information on the slave equipment itself and the resource information on the slave equipment which is received by the communicating means;
the slave equipment further includes a managing means for managing the resource information on each piece of equipment which is recorded in the resource recording means if the slave equipment operates as the master equipment;
if the master equipment operates as the slave equipment, the communicating means of the master equipment transmits the resource information on each piece of equipment which is recorded in the resource recording means to another piece of equipment which becomes the master equipment;
the master equipment operates as the slave equipment after the communicating means transmits the resource information on each piece of equipment which is recorded in the resource recording means to one of the pieces of slave equipment; and
the one of the pieces of slave equipment operates as the master equipment after the communicating means receives the resource information on each piece of equipment which is transmitted by the communicating means of the master equipment and records the resource information in the resource recording means.

3. The equipment management system according to claim 1, wherein:
each of the plurality of pieces of equipment further includes a power-source switching means for switching from a first power-source state to a second power-source state in which electric power is consumed less than that in the first power-source state; and
the managing means of the master equipment controls the power-source switching means of the slave equipment which is used among the pieces of slave equipment, so that the slave equipment is set to the first power-source state.

4. The equipment management system according to claim 3, wherein:
the communicating means of the master equipment transmits a starting confirmation notification for inquiring of the slave equipment which stays in the second power-source state whether it can start;
the communicating means of the slave equipment receives the starting confirmation notification, and if the slave equipment can start, transmits a starting enable notification for notifying the master equipment that it can start; and
if the communicating means receives the starting enable notification, the managing means of the master equipment decides that the slave equipment can start, and sets the slave equipment to the first power-source state.

5. The equipment management system according to claim 4, wherein:
unless the communicating means receives the starting enable notification when a predetermined time elapses after it transmits the starting confirmation notification, the managing means of the master equipment decides that the slave equipment which does not transmit the starting enable notification cannot start; and
the resource recording means of the master equipment deletes the resource information on the slave equipment which is decided not to be able to start by the managing means.

6. The equipment management system according to claim 3 , wherein the managing means of the master equipment controls the power-source switching means of the slave equipment which is not used among the pieces of slave equipment, so that the slave equipment is set to the second power-source state.

7. The equipment management system according to claim 1, wherein:
the resource recording means of each of the plurality of pieces of equipment records, as the resource information, equipment identification information for identifying the equipment itself and equipment resource information for specifying a function which can be used by a user;
the communicating means of the slave equipment transmits, to the master equipment, the equipment identification information on the slave equipment itself and the equipment resource information which are recorded in the resource recording means;
the communicating means of the master equipment receives the equipment identification information and the equipment resource information which are transmitted by the communicating means of the slave equipment; and
the resource recording means of the master equipment records the equipment resource information which is received by the communicating means, so that it corresponds to the equipment identification information.

8. The equipment management system according to claim 7, wherein unless the equipment identification information which is received by the communicating means is recorded, the resource recording means of the master equipment additionally records the equipment identification information and the equipment resource information which are received by the communicating means.

9. The equipment management system according to claim 7, wherein:
at least one of the pieces of slave equipment further includes an equipment-resource deletion accepting means for accepting, from a user, an equipment-resource deletion instruction which has the equipment identification information on the slave equipment itself;
the communicating means of the slave equipment which is provided with the equipment-resource deletion accepting means transmits, to the master equipment, the equipment-resource deletion instruction which is accepted by the equipment-resource deletion accepting means;
the communicating means of the master equipment receives the equipment-resource deletion instruction which is transmitted by the communicating means of the slave equipment; and
if the communicating means accepts the equipment-resource deletion instruction, the managing means of the master equipment refers to the equipment identification information which is recorded in the resource recording means, and deletes the equipment resource information which corresponds to the equipment identification information that is included in the equipment-resource deletion instruction.

10. The equipment management system according to claim 9, wherein:
the slave equipment which is provided with the equipment-resource deletion accepting means includes a contents recording unit which has a contents recording means for recording contents;
the resource recording means of the contents recording unit further records, as the resource information, contents identification information for specifying the contents which are recorded in the contents recording means;
the communicating means of the contents recording unit also transmits, to the master equipment, the contents identification information which is recorded in the resource recording means;
the communicating means of the master equipment also receives the contents identification information which is transmitted by the communicating means of the slave equipment;
the resource recording means of the master equipment also records the contents identification information which is received by the communicating means, so that it corresponds to the equipment identification information; and
if the communicating means accepts the equipment-resource deletion instruction, the managing means of the master equipment refers to the equipment identification information which is recorded in the resource recording means, and deletes all the contents identification information which corresponds to the equipment identification information that is included in the equipment-resource deletion instruction.

11. The equipment management system according to claim 1, wherein:
the slave equipment further includes a connecting means for making its connection state to the network intermittent; and
the communicating means of the slave equipment transmits the resource information which is recorded in the resource recording means before the connecting means cuts off the connection to the network.

12. The equipment management system according to claim 1, wherein:
the slave equipment further includes a power-source switching means for switching from a first power-source state to a second power-source state in which electric power is consumed less than that in the first power-source state; and
the communicating means of the slave equipment transmits, to the master equipment, the resource information which is recorded in the resource recording means, before the power-source switching means switches from the first power-source state to the second power-source state.

13. The equipment management system according to claim 1, wherein:
at least two of the plurality of pieces of equipment each include an exchangeable record-medium drive unit which executes at least either of the regeneration and the recording of an exchangeable record medium;
among the exchangeable record-medium drive units, the resource recording means of at least one piece of equipment records, as the resource information, exchangeable record-medium identification information for identifying the exchangeable record medium which is used, and usage condition information which includes at least either of the regeneration condition and the recording condition of the exchangeable record medium;
the communicating means of the slave equipment where the exchangeable record-medium identification information and the usage condition information are recorded in the resource recording means transmits, to the master equipment, the exchangeable record-medium identification information and the usage condition information which are recorded in the resource recording means;
the communicating means of the master equipment receives the exchangeable record-medium identification information and the usage condition information which are transmitted by the communicating means of the exchangeable record-medium drive unit;
the resource recording means of the master equipment records the usage condition information which is received by the communicating means, so that it corresponds to the exchangeable record-medium identification information; and
the managing means of the master equipment manages the usage condition information on each exchangeable record medium which is recorded in the resource recording means.

14. The equipment management system according to claim 1, wherein:
at least two of the plurality of pieces of equipment each further include an operating means for accepting an operation command in response to an operation by a user;
the resource recording means of one of the pieces of equipment which are provided with the operating means records, as the resource information, the equipment identification information for identifying the equipment itself, and operation setting information for specifying an operation setting which is set by the user for the operating means;
the communicating means of the slave equipment where the equipment identification information and the operation setting information are recorded in the resource recording means transmits, to the master equipment, the equipment identification information and the operation setting information which are recorded in the resource recording means;
the communicating means of the master equipment receives the equipment identification information and the operation setting information which are transmitted by the communicating means of the slave equipment;
the resource recording means of the master equipment records the operation setting information which is received by the communicating means, so that it corresponds to the equipment identification information; and
using the operation setting information on the single slave equipment which is recorded in the resource recording means, the managing means of the master equipment executes an operation setting of the operating means of another piece of equipment.

15. The equipment management system according to claim 14, wherein:
the operating means accepts the setting of a receiving channel in response to an operation by a user;
the resource recording means of one of the pieces of equipment which are provided with the operating means records, as the operation setting information, channel setting information for specifying the setting of the receiving channel which is set by the user;
the communicating means of the slave equipment where the channel setting information is recorded in the resource recording means transmits the equipment identification information and the channel setting information which are recorded in the resource recording means;
the communicating means of the master equipment receives the equipment identification information and the channel setting information which are transmitted by the communicating means of the slave equipment;
the resource recording means of the master equipment records the channel setting information which is received by the communicating means, so that it corresponds to the equipment identification information; and
using the channel setting information on the single slave equipment which is recorded in the resource recording means, the managing means of the master equipment executes a channel setting of the operating means of another piece of slave equipment.

16. The equipment management system according to claim 1, wherein:
at least one of the pieces of slave equipment includes a contents recording unit which has a contents recording means for recording contents;
the resource recording means of the contents recording unit records, as the resource information, the equipment identification information for identifying the equipment itself and contents identification information for specifying the contents which are recorded in the contents recording means;
the communicating means of the slave equipment where the equipment identification information and the contents identification information are recorded in the resource recording means transmits, to the master equipment, the equipment identification information and the contents identification information which are recorded in the resource recording means;
the communicating means of the master equipment receives the equipment identification information and the contents identification information which are transmitted by the communicating means of the slave equipment; and
the resource recording means of the master equipment records the contents identification information which is received by the communicating means, so that it corresponds to the equipment identification information.

17. The equipment management system according to claim 16, wherein unless the contents identification information which is received by the communicating means is recorded, the resource recording means of the master equipment records the contents identification information which is received by the communicating mean, so that it corresponds to the equipment resource information which is received by the communicating means.

18. The equipment management system according to claim 16, wherein:
the contents recording unit further has a generating means for referring to electronic program information which includes a receiving channel, program contents and program time for each program, and generating contents identification information on the contents which are recorded in the contents recording means; and
the resource recording means of the contents recording unit records, as the resource information, the equipment identification information for identifying the equipment itself and the contents identification information which is generated by the generating means.

19. The equipment management system according to claim 16, wherein:
one of the pieces of slave equipment further includes a deletion accepting means for accepting, from a user, a contents deletion instruction which has the equipment identification information on the slave equipment itself and the contents identification information which should be deleted;
the communicating means of the slave equipment which is provided with the deletion accepting means transmits, to the master equipment, the contents deletion instruction which is accepted by the deletion accepting means;
the communicating means of the master equipment receives the contents deletion instruction which is transmitted by the communicating means of the slave equipment; and
if the communicating means accepts the contents deletion instruction, the managing means of the master equipment refers to the equipment identification information and the contents identification information which are recorded in the resource recording means, and deletes the contents identification information which is included in the contents deletion instruction among the pieces of contents identification information which corresponds to the equipment identification information that is included in the contents deletion instruction.

20. The equipment management system according to claim 16, wherein:
if contents which are recorded in the contents recording means are deleted, the communicating means of the contents recording unit transmits, to the master equipment, a contents deletion instruction which includes the contents identification information on the deleted contents and the equipment identification information on the slave equipment itself;
the communicating means of the master equipment receives the contents deletion instruction which is transmitted by the communicating means of the contents recording unit; and
if the communicating means accepts the contents deletion instruction, the managing means of the master equipment refers to the equipment identification information and the contents identification information which are recorded in the resource recording means, and deletes the contents identification information which is included in the contents deletion instruction among the pieces of contents identification information which corresponds to the equipment identification information that is included in the contents deletion instruction.

21. The equipment management system according to claim 16, wherein:
the contents recording means includes an exchangeable record-medium recording means which records contents in an exchangeable record medium and obtains exchangeable record-medium identification information for identifying the exchangeable record medium;
the resource recording means of the contents recording unit also records, as the contents identification information, the exchangeable record-medium identification information which is obtained by the exchangeable record-medium recording means;
the communicating means of the slave equipment where the exchangeable record-medium identification information is recorded in the resource recording means transmits, to the master equipment, the equipment identification information and the contents identification information including the exchangeable record-medium identification information which are recorded in the resource recording means;
the communicating means of the master equipment receives the equipment identification information and the contents identification information including the exchangeable record-medium identification information which are transmitted by the communicating means of the slave equipment; and
the resource recording means of the master equipment records the contents identification information including the exchangeable record-medium identification information which is received by the communicating means, so that it corresponds to the equipment identification information.

22. The equipment management system according to claim 16, wherein:
the resource recording means of the contents recording unit further records, as the contents identification information, copyright management information on the copyright of contents;
the resource recording means of the master equipment records the contents identification information including the copyright management information, so that it corresponds to the equipment identification information; and
the managing means of the master equipment manages the copyright management information which is recorded in the resource recording means.

23. The equipment management system according to claim 22, wherein:
the copyright management information includes movement restriction information which has at least one of the pieces of information on the number of times up to which contents are permitted to move, the period during which the contents are permitted to move and the time when the contents are permitted to move, for an exchangeable record medium; and
the managing means of the master equipment manages the movement restriction information which is recorded in the resource recording means.

24. The equipment management system according to claim 22, wherein:
the copyright management information includes copy restriction information which has at least one of the pieces of information on the number of times up to which contents are permitted to be copied, the number of generations for which the contents are permitted to be copied, the period during which the contents are permitted to be copied and the time when the contents are permitted to be copied; and
the managing means of the master equipment manages the copy restriction information which is recorded in the resource recording means.

25. The equipment management system according to claim 24, wherein the copy restriction information includes at least one of copy impermissible information which does not permit contents to be copied, copy free information which permits the contents to be freely copied, one-generation copy permissible information which permits the contents to be copied only for one generation, and once-copy permissible information which permits the contents to be copied only once.

26. The equipment management system according to claim 22, wherein:
the copyright management information includes regeneration restriction information which has at least one of the pieces of information on the number of times up to which contents are permitted to be regenerated, the period during which the contents are permitted to be regenerated and the time when the contents are permitted to be regenerated; and
the managing means of the master equipment manages the regeneration restriction information which is recorded in the resource recording means.

27. The equipment management system according to claim 16, wherein:
one of the pieces of slave equipment further includes a reservation accepting means for accepting reservation setting information which is used to set a reserved picture-recording of a program which is recorded as contents;
the communicating means of the slave equipment which is provided with the reservation accepting means transmits, to the master equipment, the reservation setting information which is accepted by the reservation accepting means;
the communicating means of the master equipment receives the reservation setting information which is transmitted by the communicating means of the slave equipment;
the managing means of the master equipment refers to the reservation setting information which is transmitted by the communicating means and the resource information on each piece of equipment which is recorded in the resource recording means, and searches for the slave equipment which can record the picture of the reserved program; and
the communicating means of the master equipment transmits the reservation setting information to the slave equipment which is obtained by the search of the managing means.

28. The equipment management system according to claim 27, wherein:
the master equipment further includes a change detecting means for detecting a change in the broadcasting time of the program which is accepted by the reservation accepting means;
if a change in the broadcasting time of the program is detected by the change detecting means, the managing means of the master equipment refers to the resource information on each piece of equipment which is recorded in the resource recording means, and searches for another piece of slave equipment which can record a part of the program that cannot be recorded by the slave equipment which is to record the program before the change; and
the communicating means of the master equipment transmits, to the another piece of slave equipment which is obtained by the search of the managing means, post-change reservation setting information for recording a part of the program that cannot be recorded by the slave equipment which is to record the program before the change.

29. The equipment management system according to claim 27, wherein:
the slave equipment which is obtained by the search of the managing means of the master equipment further includes a picture-recording disability detecting means for, after the communicating means receives the reservation setting information from the communicating means of the master equipment, detecting that the picture of the program which is specified by the reservation setting information cannot be recorded;
if the picture-recording disability detecting means detects that the picture of the program cannot be recorded, the communicating means of the slave equipment which is provided with the picture-recording disability detecting means transmits, to the master equipment, a picture-recording disability notification for notifying it that the picture of the program cannot be recorded;
the communicating means of the master equipment receives the picture-recording disability notification which is transmitted by the communicating means of the slave equipment;
if the communicating means receives the picture-recording disability notification,the managing means of the master equipment refers to the resource information on each piece of equipment which is recorded in the resource recording means, and searches for another piece of slave equipment which can record the whole or a part of the program that cannot be recorded by the slave equipment which transmits the picture-recording disability notification; and
the communicating means of the master equipment transmits, to the another piece of slave equipment, picture-recording setting information for recording the whole or a part of the program that cannot be recorded by the slave equipment which transmits the picture-recording disability notification.

30. The equipment management system according to claim 29, wherein:
the slave equipment which transmits the picture-recording disability notification and the another piece of slave equipment further include a commercial-message detecting means for detecting a commercial message during a program whose picture is recorded;
the slave equipment which transmits the picture-recording disability notification stops recording the program during the commercial message which is detected by the commercial-message detecting means; and
the another piece of slave equipment starts to record the program during the commercial message which is detected by the commercial-message detecting means.

31. The equipment management system according to claim 27, wherein if a part of a program is recorded in one of the plurality of pieces of equipment and the rest of the program is recorded in another one of the plurality of pieces of equipment, the managing means of the master equipment moves, to either of the one piece of equipment and the another piece of equipment, the part of the program which is recorded in the other.

32. The equipment management system according to claim 16, wherein:
the plurality of pieces of equipment includes first and second contents recording units which each have a contents recording means for recording contents;
when contents are recorded, the managing means of the master equipment allows the first contents recording unit to record the contents as main contents and allows the second contents recording unit to record the contents as dependent contents;
the contents identification information includes main-contents identification information for specifying the main contents and dependent-contents identification information for specifying the dependent contents; and
using the main-contents identification information and the dependent-contents identification information, the resource recording means of the master equipment records the contents identification information so that it corresponds to equipment identification information, in a state where the contents can be identified as the main contents or the dependent contents.

33. The equipment management system according to claim 32, wherein the managing means of the master equipment records the main contents in a first recording format and records the dependent contents in a second recording format which is different from the first recording format.

34. The equipment management system according to claim 32, wherein if the main contents cannot be regenerated, the managing means of the master equipment records again main contents which are created out of the dependent contents, and if the dependent contents cannot be regenerated, the managing means of the master equipment records again dependent contents which are created out of the main contents.

35. The equipment management system according to claim 32, wherein if an operation instruction by a user is accepted to either of the main contents and the dependent contents, the managing means of the master equipment controls the plurality of pieces of equipment, so that they do not accept an operation instruction to the other by a user.

36. The equipment management system according to claim 32, wherein:
at least one of the plurality of pieces of equipment includes an exchangeable record-medium recording unit which records contents in an exchangeable record medium; and
when either of the main contents and the dependent contents is moved to the exchangeable record medium of the exchangeable record-medium recording unit, the managing means of the master equipment moves the main contents and the dependent contents together.

37. The equipment management system according to claim 32, wherein:
at least one of the plurality of pieces of equipment includes an exchangeable record-medium recording unit which records contents in an exchangeable record medium; and
when either of the main contents and the dependent contents is moved to the exchangeable record medium of the exchangeable record-medium recording unit, the managing means of the master equipment deletes the other.

38. The equipment management system according to claim 32, wherein:
at least one of the plurality of pieces of equipment includes an exchangeable record-medium recording unit which records contents in an exchangeable record medium; and
when either of the main contents and the dependent contents is moved to the exchangeable record medium of the exchangeable record-medium recording unit, the managing means of the master equipment controls the plurality of pieces of equipment, so that they do not accept an operation instruction to the other by a user.

39. The equipment management system according to claim 1, wherein:
at least one of the plurality of pieces of equipment includes a contents regeneration unit which has a contents regenerating means for regenerating contents and outputting a regeneration stream; and
if equipment which receives a regeneration stream that is outputted via the network from the contents regeneration unit records or presents the contents in which the regeneration stream is used, the managing means of the master equipment controls another piece of equipment, so that the network is used within a range where the transmission speed of the regeneration stream which is outputted from the contents regeneration unit remains unchanged.

40. The equipment management system according to claim 1, wherein the communicating means is built in an adapter means which can be attached to and detached from the main body of equipment.

41. The equipment management system according to claim 1, wherein the communicating means further includes: an encrypting means for encrypting contents when the contents are transmitted; and a decrypting means for decrypting encrypted contents.

42. The equipment management system according to claim 41, wherein:
the master equipment further includes an authenticating means for executing a contents watching-and-listening authentication processing for obtaining permission to watch and listen to contents, and a decode means for decoding the contents after the contents watching-and-listening authentication is completed by the authenticating means;
the encrypting means of the master equipment encrypts the contents which are decoded by the decode means;
the communicating means of the master equipment transmits the encrypted contents to the slave equipment;
the communicating means of the slave equipment receives the encrypted contents which are transmitted from the communicating means of the master equipment; and
the decrypting means of the slave equipment decrypts the encrypted contents which are received by the communicating means.

43. An equipment management method in which resource information on equipment that relates to at least either of the regeneration and recording of contents which include at least either of video data and audio data is managed using one piece of master equipment and at least one piece of slave equipment which are connected via a predetermined network so as to communicate with each other, comprising the steps of:
the slave equipment, transmitting, to the master equipment, resource information on the slave equipment itself which is recorded in a resource recording means of the slave equipment itself;
the master equipment, receiving the resource information which is transmitted from the slave equipment;
the master equipment, recording, in each piece of equipment, the resource information on the slave equipment which is received, in the resource recording means where resource information on the master equipment itself is recorded; and
the master equipment, managing the resource information on each piece of equipment which is recorded in the resource recording means.

44. An equipment management unit, which is connected via a predetermined network so as to communicate mutually with a plurality of pieces of equipment and operates as master equipment which manages resource information on equipment that relates to at least either of the regeneration and recording of contents which include at least either of video data and audio data, or slave equipment that is controlled by the master equipment, comprising:
a resource recording means for, if the equipment management unit operates as the slave equipment, recording resource information on the slave equipment itself; and
a communicating means for, if the equipment management unit operates as the slave equipment, transmitting, to the master equipment, the resource information on the slave equipment itself which is recorded in the resource recording means, wherein:
if the equipment management unit operates as the master equipment, the communicating means receives the resource information which is transmitted by the communicating means of the slave equipment;
if the equipment management unit operates as the master equipment, the resource recording means records, in each piece of equipment, the resource information on the slave equipment which is received by the communicating means; and
if the equipment management unit operates as the master equipment, the equipment management unit further comprises a managing means for managing the resource information on each piece of equipment which is recorded in the resource recording means.
